# EUROPÄISCHE PATENTSCHRIFT

(11) **EP 1 987 300 B1**
(45) Veröffentlichungstag und Bekanntmachung des Hinweises auf die Patenterteilung: **25.04.2018**
(21) Anmeldenummer: 07722944.1
(22) Anmeldetag: 26.02.2007
(51) Int. Cl.: F25B 35/04, F28F 3/12

(54) **ADSORPTIONS-WÄRMEPUMPE, ADSORPTIONS-KÄLTEMASCHINE UND ADSORBERELEMENTE HIERFÜR**
ADSORPTION HEAT PUMP, ADSORPTION REFRIGERATOR, AND ADSORBER ELEMENTS THEREFOR
THERMOPOMPE A ADSORPTION, REFRIGÉRATEUR A ADSORPTION, ET LEURS ÉLÉMENTS ADSORBEURS

(30) Priorität: 24.02.2006 DE 102006008786
(43) Veröffentlichungstag der Anmeldung: 05.11.2008
(73) Patentinhaber: Fraunhofer-Gesellschaft zur Förderung der angewandten Forschung e.V., 80686 München (DE)
(72) Erfinder: SCHMIDT, Ferdinand, 79106 Freiburg (DE); HENNING, Hans-Martin, 79100 Freiburg (DE); MUNZ, Gunther, 78476 Allensbach (DE); Dr. RAUSCH, Gerald, 28357 Bremen (DE); BERG, Andrea, 28719 Bremen (DE); RODLER, Norbert, 85406 Zolling (DE); STRAMM, Cornelia, 80796 München (DE)
(86) Internationale Anmeldenummer: PCT/EP2007/001632
(87) Internationale Veröffentlichungsnummer: WO 2007/098904

(56) Entgegenhaltungen:
- EP-A- 1 093 868
- DE-A1- 19 860 151
- DE-A1- 19 929 718
- JP-A- 7 190 657
- JP-A- 2004 361 067
- US-A- 2 989 383
- US-A- 4 367 079
- US-A- 4 819 717
- US-A1- 2005 061 483
- LAMBERT M A ET AL: "A REVIEW OF SOLID-VAPOR ADSORPTION HEAT PUMPS" AIAA AEROSPACE SCIENCES MEETING, XX, XX, Bd. 41ST MEETING, Nr. 2003-514, 10. Januar 2003 (2003-01-10), Seiten 1-17, XP008071596 in der Anmeldung erwähnt

## Beschreibung

### Technisches Gebiet

Die Erfindung betrifft ein Adsorberelement für einen Wärmetauscher, das als zentralen Bestandteil einen wärmeleitenden Festkörper enthält, auf dessen Oberfläche ein Sorptionsmaterial für ein dampfförmiges Adsorptiv angeordnet ist und auf dessen Außenfläche ein fluiddichter Folienverbund angeordnet ist. Die Erfindung betrifft weiterhin eine Adsorptionswärmepumpe oder Adsorptions-Kältemaschine, die mindestens ein derartiges Adsorberelement enthält.

### Stand der Technik

Bei vielen technischen Adsorptionsprozessen spielt die Leistung, mit der die entstehende Adsorptionswärme über einen Wärmetauscher abgeführt werden kann, eine wichtige Rolle. Analog gilt dies für die Wärmeübertragungsleistung beim Beheizen des Adsorbens über einen Wärmetauscher zur Desorption/Regenerierung des Adsorbens (im Folgenden üblicherweise Sorptionsmaterial genannt). Von zentraler Bedeutung sind diese Leistungskenngrößen für Adsorptionswärmepumpen und -Kältemaschinen sowie verwandte Anwendungen der Adsorption in der Energie- und Klimatisierungstechnik.

Für Adsorptionswärmepumpen und -Kältemaschinen arbeiten derzeit verschiedene Firmen intensiv an Konzepten zur Erhöhung der auf das Bauvolumen bezogenen Leistungsdichte, z.B. die Firmen Vaillant, UOP, Mitsubishi und SorTech.

Physikalisch handelt es sich hierbei um das Problem der Optimierung des Wärme- und Stofftransports in der Wärmepumpe. In einem mikroporösen Feststoff (Adsorbens/ Sorptionsmaterial, z.B. ein Zeolith oder ein Kieselgel) wird der Dampf des Arbeitsmittels (Adsorptiv, z.B. Wasser, Methanol oder Ammoniak) angelagert (adsorbiert), wobei Wärme freigesetzt wird.

Für ein verbessertes Adsorberelement ist also eine gute thermische Anbindung des mikroporösen Adsorbens/Sorptionsmaterials (z.B. eines Zeoliths) an eine Wärmeaustauscherfläche bzw. an ein auf der anderen Seite dieser Grenzfläche strömendes Wärmeträgerfluid erforderlich.

Die DE 10 2005 037 708 A1 und die DE 10 2005 037 763 A1 beschreiben einen kompakten Aufbau, mit dem eine verbesserte Wärmeübertragung von der Wärmetauscherplatte auf das Wärmeträgerfluid erreicht wird. Dies wird entweder mittels eines zylinderförmigen Wärmetauschers oder mittels eines Plattenwärmetauschers erreicht, bei dem das Wärmeträgerfluid durch Kanäle in der Wärmetauscherplatte fließt.

In der DE 101 19 258 A1 wird ein Adsorberaufbau beschrieben, bei dem das Adsorbens in Form von Granalien einlagig auf die Rippen eines Rippenrohres aufgelegt wird. Ein besserer Wärmekontakt des Sorptionsmaterials zum Wärmetauscher lässt sich mit einem Aufbau nach der US 6,102,107 erzielen. Hierbei ist der Adsorber als Lamellenwärmetauscher aufgebaut, also als Bündel paralleler Platten, die durch ein Rohrbündel senkrecht durchstoßen werden. Das Wärmeträgerfluid strömt in den Rohren und das Sorptionsmaterial ist als Schicht beidseitig auf den Platten aufgebracht. Das Sorptionsmaterial ist hierbei in eine Polymerfolie eingebunden. Bei einem derartigen Aufbau des Adsorbers lässt sich eine so gute thermische Anbindung des Sorptionsmaterials an die Wärmetauscheroberfläche erzielen, dass der Wärmeübergang auf das Wärmeträgerfluid im Wärmetauscher zum limitierenden Faktor für die erreichbare Leistungsdichte der Wärmepumpe wird.

Durch einen derartigen Adsorberaufbau werden jedoch noch nicht die Leistungsdichten erreicht, die für bestimmte Anwendungen gefordert werden (z.B. für die PKW-Klimatisierung). Um die Leistungsdichte von Adsorptionswärmepumpen weiter zu steigern und zugleich eine hohe Effizienz (COP, Arbeitszahl) zu ermöglichen, sind daher neuartige Konzepte für den Aufbau des Adsorbers erforderlich.
Zur Vollständigkeit sei angefügt, dass unter dem (thermischen) COP (Coefficient of Performance) für eine Kältemaschine das Verhältnis aus gewonnener Nutzkälte und hierfür benötigter Antriebswärme verstanden wird; für eine Wärmepumpe ist der COP als Verhältnis der Nutzwärme (auf dem mittleren Temperaturniveau) zur Antriebswärme (auf hohem Temperaturniveau) definiert. Für praktische Anwendung ist zusätzlich eine Betrachtung des gesamten Energieaufwandes einschließlich der elektrischen Verbräuche von Pumpen etc. erforderlich.

Ein zu den oben genannten Problemen hinzutretendes Problem ist die Begrenzung der Adsorptionsgeschwindigkeit durch den Transport des gasförmigen und/oder dampfförmigen Adsorptivs zu den Mikro- oder Mesoporen des festen Sorptionsmaterials, wo die Adsorptionswärme freigesetzt wird. Dieses Problem tritt insbesondere bei Adsorptiven mit niedrigem Dampfdruck auf, wie z.B. Wasser oder Methanol. Insbesondere bei dicken Schichten des Sorptionsmaterials entsteht - je nach Aufbau der Schicht - eine hohe Diffusionsbarriere für das adsorbierende Gas.
Nach der WO 02/45847 besteht ein Lösungsansatz darin, eine ausreichende Dampfdurchlässigkeit der Sorptionsmaterial-Schicht durch die Einbindung der Sorptionsmaterial-Mikropartikel in eine gut wärmeleitende und dampfdurchlässige Polymermatrix zu erreichen. Die DE 101 59 652 C2 beschreibt die Einbringung von Sorptionsmaterial in eine schaumstoffartige Matrix aus Metall.
Ein weiterer Lösungsansatz wird - zumindest für zeolithische Sorptionsmaterialien - in L. G. Gordeeva et al. "Preparation of Zeolite Layers with enhanced Mass Transfer Properties for Adsorption Air Conditioning" in Proc. of the Int. Sorption Heat Pump Conf. ISHPC, Shanghai, China, Sept. 24-27, 2002, beschrieben. Hier wird bei der Synthese der Sorptionsmaterial-Schicht einen geeigneter Porenbildner zugesetzt, der später ausgebrannt oder ausgewaschen wird, um zusätzliche Kanäle für den Dampftransport zu schaffen.

Aus der DE 199 29 718 A1 ist eine Wärmespeichermatte bekannt. Diese flexible Wärmespeichermatte nutzt das Sorptionsprinzip. Die Wärmespeichermatte besteht aus einer Deckbahn und ist mit einer Vliesschicht, einem Gitterwerk, einer Zwischenschicht und einer Bodenbahn versehen. Das Adsorbens befindet sich in Netzgebilden.

### Beschreibung

Der vorliegenden Erfindung liegt die Aufgabe zugrunde, die Nachteile des Standes der Technik zu überwinden und ein Adsorberelement anzugeben, bei dem die bei der Adsorption frei werdende Wärme effizient abgeführt werden kann und die bei der Desorption erforderliche Wärme problemlos zugeführt werden kann. Eine weitere Aufgabe der vorliegenden Erfindung ist die Bereitstellung einer Wärmepumpe oder Kältemaschine, die mehrere erfindungsgemäße Adsorberelemente in einer Anordnung enthält, die ebenfalls eine effiziente Abführung oder Zuführung von Wärme und zudem eine effiziente Wärmerückgewinnung zwischen mehreren gleich oder ähnlich aufgebauten Adsorbern ermöglicht. Ferner besteht eine Aufgabe darin, ein Adsorberelement und eine Wärmepumpe oder Kältemaschine anzugeben, in der ein möglichst hoher COP eingestellt werden kann und insbesondere die thermische Masse (Wärmekapazität) der Trägerstruktur für das Sorptionsmaterial und der übrigen Bestandteile des Wärmeüberträgers möglichst gering ist, so dass ein möglichst großes Verhältnis des sorptiven Wärmeumsatzes zum sensiblen Wärmeumsatz über den Adsorptionszyklus erreicht werden kann.

Diese Aufgaben werden durch ein Adsorberelement gemäß Anspruch 1 und eine Adsorptions-Wärmepumpe oder Adsorptions-Kältemaschine nach Anspruch 15 gelöst. Unteransprüche lehren vorteilhafte Weiterbildungen.

Erfindungsgemäß wurde erkannt, dass eine Reduzierung der Wärmedurchgangswiderstände im Adsorber und zugleich eine Reduzierung der thermischen Masse des Wärmeübertragers möglich ist, wenn das Adsorberelement auf einem wärmeleitenden offenporigen Festkörper basiert, auf dessen Grenzfläche zum Wärmeträgerfluid ein fluiddichter Folienverbund angeordnet ist. Der wärmeleitende offenporige Festkörper kann dann eine beliebige Struktur haben bzw. das Sorptionsmaterial in beliebiger Art und Weise darauf angeordnet sein, da der Folienverbund die Aufgabe übernimmt, als Grenzschicht zwischen Wärmeträgerfluid und mit Sorptionsmaterial beschichtetem Festkörper zu fungieren. Das erfindungsgemäße Adsorberelement umfasst somit einen wärmeleitenden offenporigen Festkörper, auf dessen Oberfläche ein Sorptionsmaterial für ein dampfförmiges Adsorptiv angeordnet ist, und auf dessen Außenfläche in den Bereichen, in denen ein Kontakt mit einem Wärmeträgerfluid vorgesehen ist oder erfolgt, ein fluiddichter Folienverbund angeordnet ist, der mit dem wärmeleitenden offenporigen Festkörper formschlüssig, kraftschlüssig oder stoffschlüssig verbunden ist. Unter der Außenfläche des wärmeleitenden Festkörpers wird erfindungsgemäß der Bereich der Festkörperoberfläche verstanden, in dem (über den fluiddichten Folienverbund) ein Kontakt des Festkörpers mit einem Wärmeträgerfluid vorgesehen ist oder erfolgt. Das Adsorberelement ist weiterhin derart ausgebildet, dass der Wärmeaustausch zwischen wärmeleitendem offenporigem Festkörper und Wärmeträgerfluid über diesen Folienverbund erfolgen kann und bevorzugt ausschließlich oder zumindest im Wesentlichen darüber erfolgt. Der fluiddichte Folienverbund weist mindestens eine Metallschicht oder eine Schicht aus einem Material, das zumindest in senkrechter Orientierung zur Schicht wärmeleitend ist, und mindestens eine weitere Schicht, die eine Trägerschicht oder eine Siegelschicht ist, auf.

Die im Folienverbund enthaltene Metallschicht oder die Schicht aus dem in senkrechter Orientierung zur Schicht wärmeleitenden Material (z.B. ein wärmeleitendes Polymer, das z.B. Metallpartikel oder Kohlenstoff, z.B. in Form von Nanotubes, enthalten kann) gewährleistet insbesondere, dass Vakuumdichtigkeit gegeben ist und dass sichergestellt ist, dass die Bereiche, in denen sich das Wärmeträgerfluid und das Adsorptiv befinden fluiddicht voneinander getrennt sind. Die Metallschicht ist bevorzugt eine Schicht, die aus Aluminium und/oder Kupfer besteht oder Aluminium und/oder Kupfer enthält. Bevorzugt ist die Metallschicht so dick, dass eine Wärmeleitfähigkeit des Folienverbunds senkrecht zur Folienebene gegeben ist (bevorzugt eine Wärmeleitfähigkeit von mindestens 0,2 W m⁻¹ K⁻¹, besonders bevorzugt mindestens 2 W m⁻¹ K⁻¹; die Wärmeleitfähigkeit wird erfindungsgemäß stets über die Temperaturleitfähigkeit mit der "Laser-Flash-Methode" bestimmt); hierfür sollte die Dicke der Schicht zumindest im µm-Bereich liegen und insbesondere größer als 1µm sein. Wenn der Folienverbund nicht vollflächig durch das Wärmeträgerfluid benetzt wird, sollte die Schicht so dick sein, dass sie auch nennenswert zum Wärmetransport entlang der Folie beitragen kann; die Wärmeleitfähigkeit entlang der Schicht sollte dann bevorzugt mindestens 20 W m⁻¹ K⁻¹ betragen. Damit auch Barriereeigenschaften des Folienverbunds gewährleistet werden können (und der Folienverbund mittels eines Vakuumverpackungsverfahrens auf den wärmeleitenden offenporigen Festkörper aufgebracht werden kann), muss diese Metallschicht porenfrei sein und eine Dicke von mindestens 12 µm, bevorzugt mindestens 15 µm aufweisen.
Die Siegelschicht dient dazu, ein Verbinden (insbesondere Verschweißen oder Verkleben) der Enden des Folienverbunds zu ermöglichen, so dass Vakuumdichtigkeit bzw. Dichtigkeit in Bezug auf das Wärmeträgerfluid gegeben ist. Es ist allerdings auch möglich, auf die Siegelschicht zu verzichten und das Verbinden der Folienenden z.B. mittels eines Sinterverfahrens zu erreichen. Das Verschweißen der Folienenden kann mittels herkömmlicher Folienschweißverfahren erfolgen, z.B. thermisch (hierfür sind insbesondere Siegelschichten aus Polyethylen oder Polypropylen geeignet) oder mittels Ultraschall (auch bei Folienverbunden ohne Siegelschicht) oder Mikrowellen (auch bei Folienverbunden ohne Siegelschicht). Üblicherweise wird die Siegelschicht auf einer oder auf beiden Seiten des Folienverbunds als äußerste Schicht angeordnet sein. Dies hat den Vorteil, dass ein problemloses Verbinden der Folienenden möglich ist. In diesem Fall sollte die Trägerschicht dann nicht aus einem Material bestehen, das durch Kontakt mit dem Adsorptiv (insbesondere falls Methanol als Adsorptiv eingesetzt wird) quellen kann, oder das zulässt, dass durch eindiffundierendes Adsorptiv Kaschierkleber zwischen den Schichten des Folienverbunds gelöst oder angelöst wird. Erfindungsgemäß sollte die Siegelnahtfestigkeit der Siegelnähte mindestens 25 N / 15 mm, bevorzugt 50 N / 15 mm (gemessen nach Merkblatt 33 des Fraunhofer IVV " Bestimmung der Festigkeit von Heißsiegelnähten - Quasistatische Methode") betragen, damit Langzeitstabilität auch beim Einsatz der Adsorberelemente in Umgebungen mit starker mechanischer Beanspruchung (z.B. im Motorraum eines Kfz) gewährleistet ist. Die Dicke der Siegelschicht sollte zur Erzeugung derartiger Siegelnähte mindestens 30 µm und bevorzugt mindestens 50 µm betragen. Gegenüber Metallblechen als Grenzschicht zwischen Wärmeträgerfluid und Festkörper mit Sorptionsmaterial weist ein Folienverbund mit einer Siegelschicht den Vorteil auf, dass die vakuumdichte Trennung von Wärmeträgerfluid und Sorptionsmaterial mit erheblich geringerem Herstellungsaufwand erreicht werden kann. Zudem werden Korrosionsprobleme vermieden, die im Fall der Verbindung von Blechen durch Lötprozesse auftreten könnten.
Mittels einer Trägerschicht kann der Folienverbund zusätzlich stabilisiert werden. Damit kann insbesondere die Reißfestigkeit des Folienverbunds gewährleistet werden und dessen mechanische Stabilität erhöht werden (d.h. insbesondere einen Schutz gegen Beschädigungen und Verletzungen ermöglichen). Die Trägerschicht besteht bevorzugt aus Polyamid, Polyethylenterephthalat oder einem fluorhaltigen Polymer oder enthält eines dieser Materialien. Besonders bevorzugt wird das Material der Trägerschicht derart ausgewählt, dass die Trägerschicht zur Vakuumdichtigkeit des Folienverbunds beiträgt. Weiterhin bevorzugt enthält die Trägerschicht Additive, die die Wärmeleitfähigkeit der Trägerschicht erhöhen (z.B. Kohlenstoff). Häufig wird die Trägerschicht auf der von der Außenseite des wärmeleitenden offenporigen Festkörpers abgewandten Seite des Folienverbunds angeordnet sein; insbesondere als äußerste Schicht oder als unter einer äußersten Siegelschicht angeordnete Schicht. In diesem Fall sollte die Trägerschicht nicht aus einem Material bestehen, das durch Kontakt mit dem Wärmeträgerfluid quellen kann, oder das zulässt, dass durch das Wärmeträgerfluid der Kaschierkleber zwischen den Schichten des Folienverbunds gelöst oder angelöst wird. Der Folienverbund sollte eine Trägerschicht aufweisen, wenn durch den wärmeleitenden offenporigen Festkörper eine Verletzungsgefahr (insbesondere aufgrund Durchstoßung) besteht. Diese Verletzungsgefahr hängt von der mechanischen Beanspruchung der Adsorberelemente ab und kann insbesondere bei offenporösen wärmeleitenden Festkörpern auftreten. Die Dicke der Trägerschicht sollte dann mindestens 10 µm betragen.
Besonders bevorzugt weist der Folienverbund mindestens eine Metallschicht, mindestens eine Siegelschicht und mindestens eine Trägerschicht auf. Häufig ist auf einer Seite der Metallschicht dann eine Siegelschicht und auf der anderen Seite eine Trägerschicht angeordnet. Die Schichten sind üblicherweise miteinander mittels eines geeigneten Kaschierklebstoffs oder Bindemittels verbunden. Um Langzeitstabilität zu gewährleisten sollte die Temperaturstabilität jeder einzelnen Schicht des Folienverbunds gegeben sein (insbesondere bei über 100 °C, bevorzugt auch über 120 °C). Um die Delaminationsbeständigkeit zu gewährleisten sollte die Verbundhaftung des Folienverbunds mindestens 3 N / 15 mm, bevorzugt 4 N / 15 mm betragen (die Verbundhaftung wird in Anlehnung an das IVV Merkblatt 5 " Prüfung wachskaschierter Verbundpackstoffe aus Papieren und / oder Folien - Messung der Spaltfestigkeit" geprüft). Die mechanische Stabilität des Folienverbunds sollte im Fall starker mechanischer Beanspruchung des Adsorberelements, insbesondere bei der hier vorgesehenen Verwendung offenporiger wärmeleitender Festkörper, so ausgelegt sein, dass der Folienverbund durch den Festkörper nicht beschädigt werden kann. Daher sollte eine Durchstichfestigkeit von größer 6N, bevorzugt größer 12 N gegeben sein, wenn keine (insbesondere glättende) Nachbehandlung des (offenporösen Festkörpers erfolgen soll). Die Durchstichfestigkeit wird geprüft nach DIN EN 14477.

Der erfindungsgemäß eingesetzte Folienverbund gewährleistet, dass das Wärmeträgerfluid nicht in Kontakt mit dem Sorptionsmaterial treten kann. Durch Verwendung eines Folienverbunds ist andererseits gewährleistet, dass das die Grenzfläche zwischen Wärmeträgerfluid und wärmeleitendem offenporigen Festkörper sehr dünn ist und daher ein effizienter Wärmeaustausch vom Festkörper auf das Wärmeträgerfluid erfolgen kann. Die erfindungsgemäßen Adsorberelemente haben außerdem den Vorteil dass die darin enthaltenen Folienverbunde eine geringe thermische Masse aufweisen, so dass bei gutem Wärmeverhältnis sorptiv/sensibel kurze thermische Weglängen vom Sorptionsmaterial zum Wärmeträgerfluid erreicht werden können. Die thermische Masse ist deutlich geringer als bei Blechen, wie sie z.B. aus Plattenwärmeübertragern bekannt sind, so dass die Ausdehnung des wärmeleitenden offenporigen Festkörpers senkrecht zur Kontaktfläche mit dem Folienverbund deutlich reduziert werden kann. Trotzdem kann das Verhältnis von sorptivem Wärmeumsatz zu sensiblem Wärmeumsatz wie bei Verwendung eines Bleches als Grenzschicht erreicht werden. Durch die Verwendung eines Folienverbunds wird daher die Anwendung von Erkenntnissen aus der Mikrosystemtechnik und Mikrofluidik bezüglich der Intensivierung des Wärme- und Stofftransports in Adsorbern von Wärmepumpen ermöglicht. Üblicherweise wird daher der fluiddichte Folienverbund flächig mit dem wärmeleitenden offenporigen Festkörper verbunden sein, wobei eine stoffschlüssige Verbindung aber nicht notwendig ist. Der fluiddichte Folienverbund kann auch (muss aber nicht) in z.B. röhrenförmigen Kanälen angeordnet sein, die den wärmeleitenden offenporigen Festkörper durchziehen. Die Verwendung eines Folienverbundes ermöglicht die Minimierung der Dicke der Grenzfläche zwischen Wärmeträgerfluid und wärmeleitendem offenporigem Festkörper, da durch Verwendung einer Metallschicht (oder einer Schicht aus dem in senkrechter Orientierung zur Schicht wärmeleitenden Material) und einer Trägerschicht bzw. einer Siegelschicht die mechanische Stabilität erhöht und die Verarbeitbarkeit verbessert werden kann. Gleichzeitig besteht aber größtmögliche Flexibilität bezüglich der vom Wärmeträgerfluid umströmten oder durchströmten Oberflächenstrukturen und auch bezüglich der Anordnung der Strukturen, die das Wärmeträgerfluid durchströmen soll. Bevorzugt sollte der Folienverbund so flexibel sein, dass er sich beim Anlegen von Unterdruck an die Oberfläche des Festkörpers schmiegt, so dass auf der Oberfläche vorhandene Rillen oder gegebenenfalls auch Poren mit einem Durchmesser größer 0,5 mm bereits einen flächigen Kontakt zwischen der Rillenoberfläche bzw. Porenoberfläche des Festkörpers und dem fluiddichten Folienverbund aufweisen.
Erfindungsgemäß wurde auch erkannt, dass die thermische Masse des Wärmeübertragers reduziert werden kann (zugunsten eines höheren COP), wenn von der Grenzfläche zwischen Wärmeträgerfluid und Festkörper/Sorptionsmaterial nicht eine mechanische Stabilität gegenüber dem Druck des Wärmeträgerfluids über die gesamte Fläche der Grenzfläche verlangt wird, sondern nur eine mechanische Stabilität in den Bereichen, in denen sich die Grenzfläche nicht direkt auf der Außenfläche des Festkörpers befindet (z.B. bei offenporösen Festkörpern eine mechanische Stabilibtät auf der Flächenskala der Poren der offenporösen Struktur). In diesem Fall übernimmt der wärmeleitende offenporige Festkörper die Funktion der mechanischen Stabilisierung bzgl. der Druckdifferenz zwischen Wärmeträgerfluid und Dampfdruck des dampfförmigen Adsorptivs.
Die erfindungsgemäße Anordnung hat ferner den Vorteil, dass ein fluiddichter Folienverbund leicht mit dem wärmeleitenden offenporigen Festkörper verbunden werden kann, und während des Betriebs des Wärmetauschers auch ohne zusätzliche Hilfsmittel auf der Oberfläche des Festkörpers verbleibt, sofern auf der Festkörperseite ein Unterdruck (bezogen auf die Fluidseite) vorhanden ist (wie beispielsweise bei Wärmetauschern, die mit dampfförmigem Wasser oder Methanol als Adsorptiv arbeiten) oder auf Fluidseite ein Überdruck (bezogen auf die Adsorbensseite) vorliegt. Die Anordnung hat weiterhin den Vorteil, dass die Folie leicht entfernbar und austauschbar ist (z.B. bei Materialermüdung einer Komponente des Wärmetauschers oder beim Recycling des Wärmetauschers). Als Folienverbund werden daher bevorzugt Materialien eingesetzt, die vakuumdicht sind. Weiterhin sollte der Folienverbund in dem üblicherweise für die Anwendung vorgesehenen Temperaturbereich (insbesondere über 100 °C, besonders bevorzugt auch über 120 °C) dauerhaft stabil sein.

Üblicherweise ist im erfindungsgemäßen Adsorberelement der fluiddichte Folienverbund so angeordnet, dass das Wärmeträgerfluid den wärmeleitenden offenporigen Festkörper nur an dessen äußerer Oberfläche umströmt und nicht oder nur in geringem Ausmaß den Festkörper in Form von röhrenartigen oder kanalartigen Gebilden durchströmen kann. Im Einzelfall können letztere aber sinnvoll sein.

Das Verhältnis des sorptiven Wärmeumsatzes zum sensiblen Wärmeumsatz des erfindungsgemäßen Adsorberelements ist bevorzugt größer als 2,5, besonders bevorzugt größer als 5. Der Einfluss dieses Wärmeverhältnisses auf die Effizienz (COP) hängt entscheidend von dem Grad der erreichten Wärmerückgewinnung ab. Bei sehr guter interner Wärmerückgewinnung ist ein schlechteres Wärmeverhältnis sorptiv/sensibel akzeptabel als bei schlechter Wärmerückgewinnung (insbesondere in diesem Fall darf der Wert von 2,5 auch unterschritten werden). Um eine kompakte Bauweise und eine hohe Leistungsdichte der Wärmepumpe zu erreichen, sollte der mittlere Wärmedurchgangswiderstand vom Adsorbens bis zum Wärmeträgerfluid so klein sein, dass sich Zyklenzeiten von weniger als 10 Minuten erreichen lassen, bevorzugt weniger als 5 Minuten und besonders bevorzugt weniger als 3 Minuten.

Der wärmeleitende offenporige Festkörper ist zumindest teilweise ein offenporiger Festkörper. Hierunter wird erfindungsgemäß jeglicher Werkstoff verstanden, der gewährleistet, dass das eingesetzte dampfförmige Adsorptiv (insbesondere Wasser und/oder Methanol oder gegebenenfalls auch Ammoniak) nicht nur die äußere Oberfläche des Festkörpers umströmen kann sondern auch eine vorhandene innere Oberfläche des Festkörpers durchströmen kann. Dieser offenporige Festkörper sollte bevorzugt eine effektive Wärmeleitfähigkeit größer 2Wm⁻¹ K⁻¹, besonders bevorzugt größer 6 W m⁻¹ K⁻¹ aufweisen (insbesondere in der Richtung senkrecht zu seiner Kontaktfläche mit dem Folienverbund). Ganz besonders bevorzugt sollte der offenporige Festkörper eine Porosität > 70% und dabei gleichzeitig eine effektive Wärmeleitfähigkeit größer 8 W m⁻¹ K⁻¹ (insbesondere in der Richtung senkrecht zu seiner Kontaktfläche mit dem Folienverbund) besitzen.
Generell ist erfindungsgemäß unter einem offenporösen Festkörper jede offenporöse Struktur zu verstehen, die ein durch Diffusion für ein Gas zugängliches Porenvolumen von mindestens 20% bezogen auf das Gesamtvolumen (bulk volume) des Festkörpers hat. In einer vorteilhaften Ausgestaltung ist der offenporöse Festkörper ein Metallschaum (bzw. Metallschwamm) oder ein Faserwerkstoff.

Erfindungsgemäß wurde erkannt, dass bei einem Adsorberelement auf Basis eines offenporösen Festkörpers das Sorptionsmaterial in einer gut wärmeleitenden und mechanisch stabilen Matrix enthalten ist. Diese wird häufig durch den fluiddichten Folienverbund zusätzlich stabilisiert. Bei derartigen Adsorberelementen, die im Vergleich zum Volumen eine große Oberfläche (insbesondere bezogen auf die innere Oberfläche) aufweisen, kann (aufgrund der porösen Festkörperstruktur und der gegenüber einem Rohrbündel viel größeren Kontaktfläche zum Wärmeträgerfluid) ein höherer Gesamt-Wärmeübertragungswert auf das Wärmeträgerfluid (bzw. eine kürzere "thermische Weglänge") realisiert werden.

Erfindungsgemäß wurde weiterhin erkannt, dass durch Verwendung von offenporigen Festkörpern die Kombination von Leistungsdichte und Wirkungsgrad (COP) zusätzlich verbessert werden kann. Sollte gegenüber dem Stand der Technik einer dieser beiden Parameter verschlechtert sein, so wird dieser Effekt durch eine Erhöhung des anderen Parameters stets überkompensiert. Häufig sind allerdings beide Parameter gegenüber dem Stand der Technik erhöht. Der Anteil sensibler Wärme kann gegenüber den gängigerweise nach dem Stand der Technik vorgeschlagenen Lösungen verringert werden. Der offenporöse Festkörper hat beispielsweise gegenüber Lamellenwärmetauschern nach dem Stand der Technik eine mindestens zweifach höhere (üblicherweise sogar fünffach höhere) spezifische Oberfläche, wodurch dünnere Adsorbens-Schichten und kürzere thermische Weglängen möglich werden. Dadurch wird der Nachteil einer etwaigen höheren thermischen Masse überkompensiert. (Die thermischen Weglängen sind erfindungsgemäß gegenüber denen bei einem Lamellenwärmetauscher vor allem auch deshalb kürzer, weil beim Lamellenwärmetauscher die Wärme an Rohre abgegeben werden muss, die man nicht beliebig dicht legen kann und die einzeln miteinander verschaltet werden müssen. Die erfindungsgemäß eingesetzten fluiddichten Folienverbunde, erlauben dagegen eine viel größere spezifische Kontaktfläche zum Wärmeträgerfluid.)
Aufgrund einer hohen Wärmeleitfähigkeit des erfindungsgemäßen Adsorberelements ist ein schneller Wärmetransport möglich; außerdem ist eine sehr enge Ankopplung des Adsorbers an ein Wärmeträgerfluid in einem externen hydraulischen Kreis realisierbar, das mit möglichst geringem Fremdenergieaufwand zirkuliert werden soll.
Der verbesserte COP ist bei der vorliegenden Erfindung einerseits auf eine verbesserte Wärmerückgewinnung (insbesondere bei Verwendung der Adsorberelemente in einer Anordnung, die eine "thermal wave" ermöglicht"), andererseits auf ein verbessertes Verhältnis von Masse des Sorptionsmaterials zu Wärmetauschermasse zurückzuführen. Nach dem Stand der Technik (z.B. WO 02/45847) wurde versucht, dieses Massenverhältnis durch möglichst dicke Schichten von Sorptionsmaterial einzustellen; hierdurch ergibt sich allerdings - je nach Aufbau der Schicht - eine hohe Diffusionsbarriere für das zu adsorbierende Gas sowie häufig auch ein Stabilitätsproblem der Schicht bzw. des Verbundes aus Sorptionsmaterial und Wärmeaustauscher (einerseits wegen des Überdrucks, der sich infolge von Diffusionsbarrieren bei der Desorption in der untersten Lage der Schicht aufbaut, andererseits wegen der unterschiedlichen thermischen Ausdehnungskoeffizienten von Sorptionsmaterial und Wärmetauscher und der schnellen thermischen Zyklierung dieses Verbundes). Erfindungsgemäß wurde dagegen erkannt, dass durch ein Aufbringen von Sorptionsmaterial auf die innere Oberfläche eines offenporigen wärmeleitenden Festkörpers ein die Masse des Sorptionsmaterials erhöht werden kann und gleichzeitig eine geringe Schichtdicke eingestellt werden kann. Eine verbesserte Wärmerückgewinnung kann mit den erfindungsgemäßen Adsorberelementen insbesondere dann erreicht werden, wenn die Länge der Strömungskanäle des Wärmeträgerfluids (in Strömungsrichtung) sehr groß ist gegenüber der Dicke des Adsorberelementes (senkrecht zur Ebene der Strömung bzw. des Folienverbundes). Dann spielt die Wärmeleitung im Festkörper in der Strömungsrichtung des Fluids keine große Rolle und die Voraussetzungen zur Realisierung einer "thermal wave" (die eine gute Wärmerückgewinnung erlaubt) sind gegeben. Wenn die Länge der Strömungswege weiter erhöht werden soll, um die Effizienz der "thermal wave" zu verbessern, so ist dies mit den erfindungsgemäßen Adsorberelementen einfach möglich, indem mehrere davon seriell durchströmt werden.

In einer Variante werden je zwei Hälften des offenporösen Festkörpers so ausgeführt, dass sie die Funktion des Abstandhalters, der ein ungehindertes Einströmen des dampfförmigen Adsorptivs gewährleistet, bzw. die Bereitstellung einer gut durchströmbaren Transportstruktur mit übernehmen können. Dazu können z.B. in die vom Folienverbund abgewandten Seite der jeweiligen Hälfte des offenporösen Festkörpers Kanäle oder eine Wellenstruktur in der Art eingeprägt sein, dass Strömungskanäle frei bleiben, wenn sich benachbarte Elemente des offenporösen Festkörpers aufeinander abstützen. Dabei ist stets eine ausreichende mechanische Stabilität des offenporösen Festkörpers (d.h. genügend große Abstützflächen) bzgl. des Überdrucks des Wärmeträgerfluids zu gewährleisten. In einer alternativen Realisierung der Erfindungsidee kann statt jeweils zweier Hälften, die sich aufeinander abstützen, nur ein Festkörper verwendet werden, der eine Sandwich-Struktur aufweist. Bei diesem befindet sich dann in der Mitte eine "Transportschicht", die einen geringeren Durchströmungswiderstand aufweist als die beiden außen liegenden "Stabilisierungsschichten". Im Allgemeinen werden bei dieser Ausführung die "Stabilisierungsschichten" eine höhere spezifische Oberfläche, eine höhere Wärmeleitfähigkeit und eine geringere Porosität aufweisen als die "Transportschicht" Die Herstellung einer solchen Sandwich-Struktur lässt sich besonders vorteilhaft unter Verwendung metallischer Kurzfasern unterschiedlicher Länge und Dicke, insbesondere schmelzextrahierter metallischer Kurzfasern, bewerkstelligen. Auf den der Transportschicht abgewandten Seiten der "Stabilisierungsschichten" des Sandwich-Elements ist dann jeweils der fluiddichte Folienverbund angeordnet.

Das Adsorbens (bzw. Sorptionsmaterial; z.B. ein Zeolith, Silico-Aluminophosphat (SAPO) oder ein Kieselgel) kann auf verschiedene Arten auf die Oberfläche des offenporösen wärmeleitenden Festkörpers aufgebracht bzw. in die poröse Festkörperstruktur eingebracht werden. Eine bevorzugte Variante ist die Aufkristallisation von Zeolithen mit einem konsumtiven Verfahren. Bei Verwendung eines aluminiumhaltigen offenporösen Festkörpers (beispielsweise eines Aluminiumschwamms) kann dieser als Aluminiumquelle der Zeolithsynthese dienen (vgl. F. Scheffler et al. in: Preparation and properties of an electrically heatable aluminium foam/zeolite composite, Microporous and Mesoporous Materials 67, 2004, S. 53-59). Weiterhin kann eine Aufkristallisation nach der "thermal gradient"-Methode erfolgen (vgl. A. Erdem-Senatalar et al. in: Preparation of zeolite coatings by direct heating of the substrates, Microporous and Mesoporous Materials 32, 1999, S. 331-343). Ferner kann eine Beschichtung mit Adsorbens durch Eintauchen in eine das Adsorbens enthaltende Suspension erfolgen. Ferner kann - im Fall von wärmeleitenden offenporösen Festkörpern - zusätzlich (oder gegebenenfalls auch ausschließlich) ein Befüllen der (verbleibenden) Hohlräume mit weiterem Sorptionsmaterial erfolgen. Wird das Sorptionsmaterial auf der äußeren Oberfläche des wärmeleitenden offenporigen Festkörpers angeordnet, so ist es auch denkbar, eine mit dem Sorptionsmaterial beschichtete Papierschicht, wie sie in der US 6,973, 963 B2 (insbesondere die Passage von Spalte 4, Zeile 51 bis Spalte 5, Zeile 21, auf die hiermit vollumfänglich Bezug genommen wird und die zum Offenbarungsgehalt dieses Schutzrechts zählt) beschrieben ist, einzusetzen. Ziel ist es stets, einen möglichst großen Massenanteil des Adsorbens im Adsorberelement zu erreichen und zugleich sowohl eine sehr gute Wärmeleitung vom Adsorbens zur Außenfläche des Adsorberelements (d.h. zum fluiddichten Folienverbund) zu gewährleisten als auch eine schnelle Diffusion des dampfförmigen Adsorptivs in das gesamte Volumen des Adsorberelements möglich zu machen. Insbesondere wenn der Stofftransport (also die Diffusion des Adsorptivdampfes zum Adsorbens hin) zum limitierenden Faktor für die Adsorptionskinetik eines von außen gekühlten Adsorberelements wird, wie dies z.B. aufgrund des nachträglichen Eindringens von granulärem Adsorbens der Fall sein kann, ist es sinnvoll, das Adsorberelement gezielt mit Kanälen für den Dampftransport zu versehen.

Der erfindungsgemäße wärmeleitende Festkörper kann auch auf seiner äußeren Oberfläche (in den Bereichen, in denen - über den fluiddichten Folienverbund - kein Kontakt mit dem Wärmeträgerfluid vorgesehen ist) eine Schicht des Sorptionsmaterials aufweisen. Im Fall von nicht offenporösen Festkörpern wäre dies die einzige Anordnungsmöglichkeit des Sorptionsmaterials; ist der wärmeleitende Festkörper offenporös so kann das Sorptionsmaterial auf dessen innerer und/oder äußerer Oberfläche angeordnet sein. Unter äußerer Oberfläche ist hierbei die Oberfläche des Festkörpers zu verstehen, die keine innere Oberfläche ist, also insbesondere nicht durch die Poren des Festkörpers gebildet wird.

Trägt der wärmeleitende offenporige Festkörper auf seiner äußeren Oberfläche eine Schicht des Sorptionsmaterials, so ist diese äußere Oberfläche (insbesondere im Bereich der Beschichtung) bevorzugt derart strukturiert, dass diese strukturierte äußere Oberfläche mindestens um den Faktor 1,4 größer ist als die die äußere Oberfläche bildende Ebene des korrespondierenden ebenen Körpers. Wird beispielsweise eine ebene Fläche durch eine Fläche ersetzt, bei der in diese Fläche parallele Rillen geprägt sind, die einen Schnitt in Form eines Sägeprofils aufweisen, bei dem jeder "Sägezahn" die Form eines gleichschenkligen, rechtwinkligen Dreiecks hat, so beträgt dieser Faktor etwa 1,41. Die strukturierte äußere Oberfläche ähnelt daher insbesondere der Oberflächenstruktur einer Wellpappe; der Schnitt durch eine derart strukturierte Oberfläche ergibt insbesondere ein Sägeprofil, ein Rechteckprofil, ein Sinusprofil oder dergleichen. Auf der äußeren Oberfläche können auch oberflächenvergrößerte Strukturen, z.B. durch Faser- oder Pulverstrukturen, die mit der Oberfläche des Festkörpers versinterbar, verschweißbar oder verlötbar sind, aufgebracht werden. Die Geometrie der strukturierten Oberfläche ist generell nicht wesentlich; wesentlich ist vielmehr, dass die Oberflächenzunahme im Vergleich zur unstrukturierten Ebene maximiert wird.

Der fluiddichte Folienverbund kann mit dem wärmeleitenden offenporigen Festkörper stoffschlüssig verbunden werden, indem beispielsweise eine stoffschlüssige Verbindung mittels eines Binders erfolgt (bevorzugt wird hier ein Binder gewählt, der eine hohe Wärmeleitfähigkeit aufweist, z.B. also ein Binder, der fein verteilte Metallpartikel, Kohlenstoff oder andere Partikel, die eine hinreichende Wärmeleitfähigkeit gewährleisten, enthält) oder indem der Folienverbund auf den wärmeleitenden offenporigen Festkörper aufgesintert wird (als Beispiel ist hier das Aufsintern auf einen metallischen Festkörper zu nennen, bei dem ein Folienverbund verwendet wird, der eine dem Festkörper zugewandte Metallschicht aus Kupfer enthält).
Ein stoffschlüssig mit dem wärmeleitenden offenporigen Festkörper verbundener Folienverbund hat den Vorteil, dass er bei jeglichen Druckverhältnissen eine an den wärmeleitenden offenporigen Festkörper angeschmiegte Form beibehält.

Der Folienverbund kann auch mittels eines Vakuumverpackungsverfahrens auf den wärmeleitenden offenporigen Festkörper aufgebracht werden. Als Vakuumverpackungsverfahren zum Aufbringen des fluiddichten Folienverbunds auf den wärmeleitendenoffenporigen Festkörper sind prinzipiell alle auf dem Markt verfügbaren Verfahren (z.B. Lebensmittelverpackungsverfahren) denkbar.
Alternativ kann der Folienverbund auf einen - insbesondere offenporigen - Festkörper aufgebracht werden kann, indem der Folienverbund (z.B. in einer Kavität) so angeordnet wird, dass er zumindest teilweise der äußeren Form des wärmeleitenden offenporigen Festkörpers entspricht. Auf dem so angeordneten Folienverbund kann dann der wärmeleitende offenporige Festkörper oder eine Vorstufe hiervon (z.B. lose oder schon teilweise versinterte Metallfasern, insbesondere auch Fasern, die Kupfer enthalten) angeordnet werden. Anschließend kann der Folienverbund und der wärmeleitende offenporige Festkörper bzw. die Vorstufe hiervon stoffschlüssig miteinander verbunden werden (z.B. mittels eines Sinterverfahrens), so dass spätestens durch dieses Verbinden der wärmeleitende offenporige Festkörper entsteht. Nachfolgend oder alternativ kann der Folienverbund bzw. die Enden des Folienverbunds (sobald auch das Sorptionsmaterial enthalten ist) versiegelt werden, so dass ein formstabiles Adsorberelement entsteht.
Der Folienverbund kann einerseits direkt auf den wärmeleitenden offenporigen Festkörper aufgebracht werden, insbesondere wenn das Konstruktionsprinzip daran orientiert ist, dass der fluiddichte Folienverbund primär als Begrenzung für die Struktureinheit Adsorptiv/Adsorptionsmittel/wärmeleitender Festkörper verstanden wird. In diesem Fall können dann mehrere Adsorberelemente so angeordnet werden, dass sie in beliebiger Anordnung von Wärmeträgerfluid umströmbar sind.
Alternativ kann der Folienverbund eine geometrische Form nach Art einer Manschette oder eines Schlauches besitzen, insbesondere wenn das Konstruktionsprinzip daran orientiert ist, dass der fluiddichte Folienverbund primär als Begrenzung für die Struktureinheit Wärmeträgerfluid verstanden wird. In diesem Fall wird die geometrische Form des Folienverbunds so festgelegt, dass ein oder mehrere Teilbereiche des so vorliegenden Folienverbundes mit der äußeren Oberfläche des wärmeleitenden offenporigen Festkörpers formschlüssig, stoffschlüssig oder kraftschlüssig verbunden werden können. Unter einem Folienverbund der eine geometrische Form nach Art eines Schlauchs oder einer Manschette besitzt, wird hierbei insbesondere verstanden, dass entweder zwei gegenüberliegenden (Schnitt)kanten einer (z.B. rechteckigen) Lage eines Folienverbunds so miteinander verbunden (z.B. versiegelt) werden, dass ein schlauchartiges bzw. manschettenförmiges Gebilde entsteht oder das zwei aufeinander angeordnete Lagen des Folienverbunds entsprechend miteinander auf zwei sich gegenüberliegenden Seiten jeweils an den aufeinanderliegenden (Schnitt)kanten verbunden (z.B. versiegelt) werden.
Ein derartiges Konstruktionsprinzip hat den Vorteil, dass das eingesetzte Volumen an Wärmeträgerfluid minimiert werden kann (im Gegensatz dazu kann bei der vorhergehenden Variante die Fläche des fluiddichten Folienverbunds maximiert werden). Z.B. kann auf der Außenfläche eines ersten wärmeleitenden offenporigen Festkörpers eine Kanalstruktur eingeprägt sein, die zu einer Durchströmung der gesamten Fläche des schlauch- bzw. manschettenförmigen Folienverbunds bei geringem Druckverlust führt. Üblicherweise wird ein derart ausgebildeter Folienverbund zwischen die Außenfläche des ersten wärmeleitenden offenporigen Festkörpers und die Außenfläche eines zweiten wärmeleitenden offenporigen Festkörpers oder eine andere Begrenzungsfläche (z.B. eine Fläche, die als äußere Wandung einer Wärmepumpe dient) eingelegt oder eingeklemmt, so dass sich spätestens beim Anlegen eines Überdruckes auf der Seite des Wärmeträgerfluids der fluiddichte Folienverbund der Oberflächenstruktur des offenporösen Festkörpers anpasst und dadurch z.B. eine Kanalstruktur für das Wärmeträgerfluid entsteht. Der fluiddichte Folienverbund kann hierbei passgenau vorgeprägt sein, um sich den Strukturen in der Außenfläche des wärmeleitenden offenporigen Festkörpers optimal anzupassen und wird üblicherweise mit dem Festkörper nicht stoffschlüssig verbunden. Das Aufblähen (und gegebenenfalls Platzen) eines derart angeordneten Folienverbunds wird bei der Durchströmung mit unter Druck stehendem Wärmeträgerfluid durch äußere stabilisierende Elemente, insbesondere durch die auf beiden Seiten des fluiddichten Folienverbunds angeordneten wärmeleitenden offenporigen Festkörper bzw. Begrenzungsflächen verhindert. In Bereichen, in denen nicht der Festkörper von außen stabilisiert, kann z.B. auch durch Siegelnähte der Tüte die Kraftverteilung verbessert werden.
Ist das Konstruktionsprinzip daran orientiert, dass der fluiddichte Folienverbund primär als Begrenzung für die Struktureinheit Wärmeträgerfluid verstanden wird, so müssen keine nachträglichen Zugänge für den Transport des Adsorptivs zum wärmeleitenden offenporigen Festkörper geschaffen werden. Eine derartige Anordnung hat weiterhin den Vorteil, beim Aufbau des Adsorberelements sehr große Strömungsquerschnitte für den Dampftransport des Adsorptivs bereitgestellt werden können. So können z.B. auf der dem fluiddichten Folienverbund abgewandten Seite eines wärmeleitenden Festkörpers Abstandshalter angebracht bzw. in den Festkörper integriert werden z.B. in Form eines Gitters oder eines gewellten Bleches; gegebenenfalls kann dann die Oberfläche dieses Abstandshalters - wie vorstehend beschrieben - derart strukturiert werden, dass sie mindestens um den Faktor 1,4 größer ist als die die äußere Oberfläche bildende Ebene des korrespondierenden ebenen Körpers. Hierdurch kann ein breiter Dampftransportkanal zur Oberfläche des offenporigen wärmeleitenden Festkörpers geschaffen werden. Außerdem können so benachbarte (z.B. auch spiegelbildlich angeordnete) Adsorberelemente gegen den Überdruck des Wärmeträgerfluids auf Abstand gehalten werden.
Generell hat die vorstehende Alternative den Vorteil, dass keine großen Barrieren für den Transport des dampfförmigen Adsorptivs vorhanden sind, wie dies bei den weiter oben beschriebenen Varianten mit Adsorptivkanälen der Fall ist (die Barrieren ergeben sich bei diesen aus den langen Transportwegen innerhalb der gegebenenfalls offenporösen Struktur und/oder durch die Engpässe an den Durchführungen durch die Umhüllung durch den vakuumdichten Folienverbund). Um einen sehr schnellen Wärmetransport in die Adsorberelemente (und aus diesen heraus) zu ermöglichen, sollten möglichst dünne Platten des wärmeleitenden offenporigen Festkörpers eingesetzt werden.
Bei den Varianten mit Adsorptivkanälen bedeutet jedoch der Einsatz von dünnen Platten, dass zugleich nur ein kleiner Strömungsquerschnitt für das dampfförmige Adsorptiv realisiert werden kann, so dass eine gute Wärmeleitung durch hohe Druckverluste erkauft wird und bei geringen Plattendicken der Dampftransport zum limitierenden Faktor für die Adsorptionskinetik und somit für die Leistungsdichte eines so aufgebauten Adsorbers wird. Auch ist bei diesen Varianten bei der Verwendung einer größeren Anzahl dünnerer Platten statt weniger dickerer Platten ein größerer Aufwand für die fluiddichte (Vakuum)-verpackung der Adsorberelemente (z.B. kleinere T-förmige Siegelungsstellen des fluiddichten Folienverbunds) und ein größerer konstruktiver Aufwand (Durchführungen der Adsorptivkanäle; benötigte Dichtungselemente) erforderlich.

Besitzt der Folienverbund eine geometrische Form nach Art einer Manschette oder eines Schlauches, so können auch die verbliebenen noch nicht miteinander verbundenen sich gegenüberliegenden (Schnitt)kanten (die den Anfang bzw. das Ende dieses röhrenförmigen Gebildes darstellen) miteinander verbunden (z.B. versiegelt) werden, so dass ein Gebilde nach Art eines Beutels für Flüssigkeiten (etwa nach Art eines Blutbeutels oder Infusionsbeutels) entsteht, in dem mindestens je einen Anschluss, durch den das Wärmeträgerfluid in den Beutel einströmen und einen Anschluss, durch den das Wärmeträgerfluid aus dem Beutel herausströmen kann, erhalten bleiben oder nachträglich angebracht werden.Die Anschlüsse für das Wärmeträgerfluid können wie bei Blutbeuteln angeordnet sein, sie können sich aber auch. an diagonal gegenüberliegenden Ecken befinden (Tichelmann-Verschaltung).
Die Verwendung eines beutelförmigen Folienverbunds mit Anschlüssen hat den Vorteil, dass bei paralleler Verschaltung von Adsorberelementen der Druckverlust des Wärmeträgerfluids, der beim Durchströmen des Folienverbunds auftritt besonders gering ist. Dann können die einzelnen Kanäle für das Wärmeträgerfluid mit geringerem hydraulischem Durchmesser ausgelegt werden, so dass sich der Wärmeübergang auf der Fluidseite verbessert.

In einer weiteren vorteilhaften Ausgestaltung ist die Oberfläche des fluiddichten Folienverbunds und/oder die darunter liegende Außenfläche des wärmeleitenden offenporigen Festkörpers so strukturiert, dass sich im daran vorbeiströmenden Wärmeträgerfluid eine turbulente Strömung ausbilden kann. Ist nur die Außenfläche des wärmeleitenden offenporigen Festkörpers entsprechend strukturiert, so müssen Folienverbund und Struktur der Außenfläche so gewählt werden, dass sich beim Verbinden von wärmeleitendem offenporigem Festkörper und Folienverbund die Oberfläche des Folienverbunds der des Festkörpers anpasst. Die Begünstigung von Turbulenz durch eine raue Oberfläche wird in der Strömungsmechanik z.B. durch die Sandkornrauhigkeit beschrieben. Ein derart strukturiertes Adsorberelement hat den Vorteil, dass ein besserer Wärmeaustausch mit dem Wärmeträgerfluid möglich ist. Erfindungsgemäß sind insbesondere Adsorberelemente geeignet, bei denen sich der fluiddichte Folienverbund der Oberflächenrauhigkeit des wärmeleitenden offenporigen Festkörpers anpasst (bzw. die gleiche oder eine nur geringfügig unterschiedliche Oberflächenrauhigkeit besitzt) und somit eine Oberflächenstruktur aufweist, die eine turbulente Strömung im daran vorbeiströmenden Wärmeträgerfluid begünstigt.
Da zugleich die Wärmeübertragung maximiert und der Druckverlust im Hydraulikkreis des Wärmeträgerfluids minimiert werden soll, besteht ein Optimierungsproblem. Die zur Lösung dieses Problems gemäß dem Stand der Technik zur Verfügung stehenden Berechnungsmethoden sind z.B. im VDI-Wärmeatlas (Springer-Verlag, Berlin, ISBN 3540255036, 10. Auflage, Januar 2006) zu finden.

Die Oberfläche des fluiddichten Folienverbunds und/oder die darunter liegende Außenfläche des wärmeleitenden offenporigen Festkörpers kann auch so ausgeführt sein, dass "dellenartige" und/oder rillenartige und/oder schlitzförmige Vertiefungen vorhanden sind. Rillenartige Vertiefungen können beispielsweise auch Kanten des Adsorberelements (insbesondere bei quaderförmigen Adsorberelementen) queren, d.h. über zwei oder mehr Flächen verlaufen, die sich in unterschiedlichen Raumrichtungen ausdehnen. Diese dellenförmigen oder rillenförmigen Vertiefungen können bereits auf der Oberfläche des wärmeleitenden offenporigen Festkörpers vorhanden sein (bzw. kann der Festkörper gezielt so hergestellt werden, dass sich diese bilden), sie können aber auch ausschließlich oder zusätzlich auf der Oberfläche des fluiddichten Folienverbunds vorhanden sein.

Ein Vorteil dellenförmiger Vertiefungen ist die Ausbildung turbulenter Strömungen und damit ein verbesserter Wärmeaustausch mit dem Wärmeträgerfluid. Ein Vorteil rillenförmiger Vertiefungen ist, dass hiermit die Fluidmenge bezogen auf die aufzunehmende Wärme, minimiert werden kann. D.h. das Verhältnis zwischen der Oberfläche des wärmeleitenden offenporigen Festkörpers und dem Volumen des Wärmeträgerfluids kann erhöht werden, und der COP steigt. Eine Minimierung der Fluidmenge kann dadurch erreicht werden, dass das Adsorberelement in einer Wärmepumpe bzw. Kältemaschine so angeordnet wird, dass das Wärmeträgerfluid an der Oberfläche des Adsorberelements so vorbeiströmt, dass es im Wesentlichen oder ausschließlich durch die rillenförmigen Vertiefungen strömt. Der hydraulische Durchmesser dieser Vertiefungen/Kanäle sollte bevorzugt kleiner als 3mm sein
In einer vorteilhaften Ausgestaltung kann die rillenförmige Struktur auch auf bionischen Prinzipien basieren, wie sie z.B. in der EP 1525428 B1 beschrieben sind, die zu einer gleichmäßigen Durchströmung der gesamten Fläche des fluiddichten Folienverbunds bei geringem Druckverlust führt.

In einer weiteren vorteilhaften Ausgestaltung ist die Oberfläche des fluiddichten Folienverbunds und/oder die darunter liegende Außenfläche des wärmeleitenden offenporigen Festkörpers so strukturiert, dass sie im Zusammenhang mit einer Zweiphasenströmung des Wärmeträgerfluids genutzt werden kann, wie sie aus der Technik der " Heat-Pipes" bekannt ist (vgl. hierzu z.B. G. P. Peterson, "An Introduction to Heat Pipes - Modeling, Testing and Applications", John Wiley & Sons, 1994). Insbesondere kann die genannte Oberfläche mit feinen Rillen strukturiert sein. Derartige Rillen können beispielsweise mittels eines Folienziehverfahrens aufgebracht werden. Es ist beispielsweise möglich, eine im Folienverbund vorhandene Trägerschicht (vor dem Aufbringen weiterer Schichten) zu strukturieren oder eine separate Strukturierungsschicht aufzubringen, die die Strukturierung bereits aufweist oder die bereits im Folienverbund enthaltene noch nicht strukturierte Strukturierungsschicht (zusammen mit dem Folienverbund) einem Oberflächenstrukturierungsverfahren zu unterwerfen (z.B. indem mittels einer Strukturwalze die Strukturierung aufgeprägt wird). Bevorzugt wird die Oberfläche des fluiddichten Folienverbunds derart ausgeführt, dass die Rillen im Wesentlichen parallel verlaufen und so angeordnet sind, dass sie bei Verwendung in einem Wärmetauscher oder einer Kältemaschine im Wesentlichen vertikal verlaufen können.

Der Kapillareffekt, der den Transport des Wärmeträgerfluids in der flüssigen Phase verursacht, kann durch eine Beschichtung der Oberfläche des fluiddichten Folienverbunds mit einem geeigneten Dochtmaterial unterstützt werden oder auch ausschließlich mittels eines Dochtmaterials realisiert sein. Dies kann jedes nach dem Stand der Technik für "Heat Pipes" verwendete Dochtmaterial sein, z.B. ein Polymer mit Poren im Mikrometer-Bereich (wie z.B. in US 4,765,396 beschrieben), das schon während des Herstellungsprozesses des Folienverbunds aufgebracht wird, oder z.B. eine dünne Zeolithschicht auf dem Folienverbund. Bevorzugt sollte das Dochtmaterial aus einem Material bestehen, das sich gut mit dem fluiddichten Folienverbund verbindet (z.B. aus einem Polymer bestehen, das ähnliche Eigenschaften aufweist, wie das der Oberfläche des Folienverbunds). Erforderlich ist in allen Fällen, dass die jeweilige Kapillarstruktur so ausgebildet ist, dass (nach dem Prinzip der "Heat Pipes") ein Verdampfen des Wärmeträgerfluids durch vom Adsorberelement abgegebene Wärme möglich ist.
Bei einem Einsatz derartiger Adsorberelemente in einer "Heat Pipe" umströmt das Wärmeträgerfluid die Adsorberelemente dann nicht, sondern es wird in der flüssigen Phase durch die Kapillarwirkung der rillenförmigen Vertiefungen bzw. des Dochtmaterials am Adsorberelement "entlang gezogen" und wird durch Wärmezufuhr verdampft. Für den Dampftransport sind dann erfindungsgemäß geeignete Kanalstrukturen vorzusehen, wie sie aus dem Stand der Technik für Heat Pipes bekannt sind. Beispielsweise können hierfür Dampfkanäle, die durch zwei nebeneinander angeordnete Adsorberelemente gebildet werden vorgesehen sein.
Die vorstehend beschriebene Ausführung, dass das fluiddichte Element eine Oberflächenbeschaffenheit aufweist, mit der sich eine Eignung für eine Verwendung in einer "Heat-Pipe" realisieren lässt, stellt eine eigene Erfindung dar (unabhängig von einer Kombination des Merkmals der "Oberflächenbeschaffenheit des fluiddichten Elements" mit dem Merkmal, dass ein offenporiger Festkörper enthalten sein muss). Vorteilhafte Ausgestaltungen dieser Erfindung ergeben sich aus den Merkmalen der Unteransprüche (ohne dass hierbei die jeweiligen Rückbezüge gelten).

In einer vorteilhaften Ausgestaltung hat das erfindungsgemäße Adsorberelement eine geometrische Form nach Art eines Quaders, einer Spirale oder eines Hohlzylinders. Adsorberelemente mit einer geometrischen Form nach Art eines Quaders haben bevorzugt in einer Richtung eine wesentlich geringere Ausdehnung als in den beiden anderen Raumrichtungen; dies gilt auch für von einem derartigen Quader abgeleitete Formen wie Spirale oder Hohlzylinder. Hierbei wird erfindungsgemäß unter einer geometrischen Form nach Art eines Quaders neben reinen Quadern auch jeder geometrische Körper verstanden, der sich durch Krafteinwirkung in einer Raumrichtung auf einen Quader ergibt, ohne dass wesentliche Veränderungen der Größe der Oberflächen des Quaders erfolgen (insbesondere sind stapelbare geometrische Körper zu nennen, ferner fallen hierunter auch rinnenförmig bzw. schalenförmig verformte Quader oder auch Quader mit konvexen und/oder konkaven Außenflächen oder Teilflächen). Die geometrische Form dieser Adsorberelemente nach Art eines Quaders nähert sich also bevorzugt der Form einer dünnen Platte an (dies gilt - wie erwähnt - auch für den Hohlzylinder, der sich von einer Platte ableitet, deren Enden jeweils um 180° gegeneinander "verdreht" wurden und gilt ebenfalls für ein spiralförmiges Adsorberelement, das sich von einer "aufgewickelten" Platte ableitet). Entscheidend für die Form des Adsorberelements ist, dass entstehende Wärme einen möglichst kurzen Weg zur Außenfläche des Adsorberelements hat, wo sie über den fluiddichten Folienverbund an das Wärmeträgerfluid abgegeben wird. Ist das Adsorberelement ein Hohlzylinder, so kann auch im Inneren des Hohlzylinders die Zuleitung des Adsorptivs erfolgen.

Bevorzugt weist das Adsorberelement mit einer geometrischen Form nach Art eines Quaders eine Geometrie auf, bei der die drei sich jeweils gegenüberliegenden Flächenpaare des Quaders folgende Bedingungen erfüllen: Das erste sich gegenüberliegende Flächenpaar besitzt bevorzugt einen mittleren Abstand von 1 mm bis 30 mm, besonders bevorzugt 0,4 bis 20 mm und ganz besonders bevorzugt 1 bis 8 mm. Das zweite und das dritte sich gegenüberliegende Flächenpaar des Quaders besitzen einen mittleren Abstand, der mindestens um den Faktor 4, bevorzugt mindestens um den Faktor 10 größer ist als der des ersten Flächenpaars. Bevorzugt ist die Oberfläche der beiden größten Seitenflächen der geometrischen Form nach Art eines Quaders jeweils mindestens um den Faktor 16 größer als das Quadrat des mittleren Abstands dieser Flächen, besonders bevorzugt mindestens um den Faktor 50 und ganz besonders bevorzugt mindestens um den Faktor 100.
Ein derart ausgebildetes Adsorberelement hat den Vorteil, dass der Weg, den die Wärme vom Sorptionsmaterial zur Außenseite des Adsorberelements (d.h. zur Außenseite des fluiddichten Folienverbunds) zurücklegen muss, minimiert werden kann.

In einer vorteilhaften Ausgestaltung hat das erfindungsgemäße Adsorberelement mit einer geometrischen Form nach Art eines Quaders, einer Spirale oder eines Hohlzylinders rillen- und/oder dellen- und/oder schlitzförmigen Vertiefungen im wärmeleitenden offenporigen Festkörper, an die sich der fluiddichte Folienverbund anschmiegt. Hierdurch kann die thermische Weglänge weiter reduziert werden. Eine Möglichkeit der besonders guten Ausnutzung des Gesamtvolumens bei sehr kurzer thermischer Weglänge ist es, diese rillen- und/ oder dellen- und/oder schlitzförmigen Vertiefungen so anzuordnen, dass die zwischen zwei Vertiefungen liegenden Erhebungen in die Vertiefungen eines benachbarten Adsorberelements mit gleichartiger Oberflächenstruktur greifen kann, so dass die zwei benachbarten Adsorberelemente nach Art zweier Kämme ineinander greifen und zwischen den Adsorberelementen ein gewundener, bevorzugt auch schmaler, Spalt für das Wärmeträgerfluid frei bleibt. Eine derartige Oberflächenstruktur, die beispielsweise wellenförmig oder kammartig sein kann, kann auf einer oder mehreren Flächen vorliegen; bevorzugt auf einem oder beiden Flächen des Flächenpaars mit dem geringsten mittleren Abstand.

Der in den erfindungsgemäßen Adsorberelementen eingesetzte wärmeleitende offenporige Festkörper besteht bevorzugt aus einem Metall und/oder einer Keramik bzw. enthält ein Metall und/oder eine Keramik. Erfindungsgemäß kann also unter dem wärmeleitenden Festkörper auch ein Festkörper auf Basis eines Metalls (bzw. einer Legierung), das für bestimmte Anwendungszwecke Zuschlagstoffe, wie z.B. keramische Partikel, enthält, verstanden werden; ebenso kann darunter ein keramischer wärmeleitender Festkörper verstanden werden, der für bestimmte Anwendungszwecke keramische oder nicht keramische Zuschlagstoffe enthält (z.B. metallische Partikel zur Erhöhung der Wärmeleitfähigkeit). Generell sollte der Festkörper eine möglichst hohe Wärmeleitfähigkeit besitzen.
Der wärmeleitende offenporige Festkörper sollte zugleich aber eine möglichst hohe Porosität aufweisen, Das Skelettmaterial des offenporösen Festkörpers sollte bevorzugt eine Wärmeleitfähigkeit größer als 30 W m⁻¹ K⁻¹, besonders bevorzugt größer als 150 W m⁻¹ K⁻¹ aufweisen. Der offenporöse Festkörper als solcher sollte bevorzugt (insbesondere in der Richtung senkrecht zur Kontaktfläche mit dem Folienverbund) eine Wärmeleitfähigkeit größer als 6 W m⁻¹ K⁻¹ aufweisen. Bei einer anisotropen Struktur des offenporösen Festkörpers sollte die Wärmeleitfähigkeit bevorzugt entlang der kürzesten Wege zum Wärmeträgerfluid am höchsten sein.
Wird ein wärmeleitender offenporiger Festkörper aus Keramik bzw. auf Basis einer Keramik verwendet, so kann hierfür z.B. Aluminiumnitrid und/oder Siliziumcarbid verwendet werden.

Bevorzugt besteht der wärmeleitende offenporige Festkörper aus Metall oder enthält ein Metall. Besonders bevorzugt wird das Metall hierbei aus Aluminium, Kupfer, Silber und Legierungen dieser Elemente ausgewählt, da diese eine besonders hohe Wärmeleitfähigkeit besitzen.
In einer Variante werden als Metall enthaltende offenporöse Festkörper mit (bevorzugt kurzen) Kohlefasern verstärkte Metallmatrices, insbesondere Kupfermatrices, eingesetzt, die sich durch anpassbares Temperaturausdehnungsverhalten und hohe Wärmeleitfähigkeit auszeichnen. Besonders bevorzugt weisen derartige Verbundwerkstoffe 30-65 Vol-% Kohlefasern auf, wobei in Abhängigkeit von der Konsolidierungsmethode verschiedene Orientierungsverteilungen der Fasern in der Metallmatrix eingestellt werden können.

Wird als wärmeleitender offenporiger Festkörper ein metallischer Körper verwendet, so kann dieser insbesondere durch pulvermetallurgische Verfahren, Sinterverfahren, Siebdruckverfahren und/oder Gussverfahren hergestellt werden.
Eine pulvermetallurgische Herstellung eines offenporigen metallischen Körpers kann z.B. erfolgen, indem poröse Strukturelemente aus einem organischen Werkstoff (die die Struktur der später ausgebildeten Poren haben) mit einem Metallpulver oder Metallpulvergemisch beaufschlagt werden und nachfolgend einer thermischen Behandlung unterworfen werden, wobei (üblicherweise in einer ersten Stufe) der organische Werkstoff ausgetrieben wird. Üblicherweise erfolgt in einer zweiten Stufe dann die Herstellung des porösen metallischen Körpers durch Sinterung. Alternativ kann auch eine Abscheidung von Metallen auf der Oberfläche des organischen Werkstoffs erfolgen (beispielsweise eine Abscheidung aus der Gasphase, z.B. bei Nickel). Das poröse Strukturelement aus organischem Werkstoff kann beispielsweise auch ein Körper aus (gegebenenfalls unter Druck) miteinander versinterten kugelförmigen Gebilden (beispielsweise Polystyrolkugeln) sein. Die pulvermetallurgische Route kann auch für die Herstellung von offenporösen keramischen Materialien angewandt werden; hierbei müssen dann die organischen Grundkörper mit keramischen Pulverpartikeln beschichtet werden und anschließend versintert werden, wobei die organische Komponente ausgetrieben wird.
Eine offenporöse metallische Struktur mittels eines Siebdruckverfahrens kann erhalten werden, indem ein schichtweiser Aufbau der Struktur durch Siebdruck erfolgt. Die Strukturierung wird hierbei durch Maskenvariation vorgenommen. Üblicherweise ist nach der schichtweisen Generierung der Struktur ein anschließender Entbinderungs- und/oder Sinterschritt notwendig. Mit diesem Verfahren kann eine offenporöse Struktur hergestellt werden, die von der Struktur eines organischen (strukturbildenden) Basismaterials unabhängig ist; sie kann auch zur Herstellung von keramischen offenporösen Festkörpern verwandt werden.
In einer bevorzugten Variante wird der wärmeleitende offenporige Festkörper zumindest teilweise mittels eines Gussverfahrens hergestellt. Hierbei ist insbesondere ein Gussverfahren vorteilhaft, bei dem ein die Porenform abbildendes organisches Material in eine Gussform eingebracht wird, die anschließend mit einer Metallschmelze bzw. einer metallhaltigen Schmelze infiltriert wird. Beispielsweise sei ein Aluminiumdruckgussverfahren genannt, bei dem eine Aluminiumschmelze sehr schnell in eine gekühlte Form gepresst wird, die ein Granulat aus einem Polymermaterial enthält, das die Schmelze verdrängt und so zur porösen Struktur des gegossenen Bauteils führt. Das organische Material (bzw. das Polymergranulat) wird nach der Erstarrung der Metallschmelze bzw. metallhaltigen Schmelze bei einer Temperatur unterhalb der Schmelztemperatur des Metalls (bzw. der Liquidus-Temperatur) ausgeschmolzen. Bevorzugt wird das Gussverfahren so durchgeführt, dass eine Infiltration der Polymergranulate ohne ein Ausschmelzen derselben erfolgt. Beispielhaft sei als mögliches Material für das Polymergranulat Polystyrol genannt. Als Metallschmelze wird bevorzugt eine Schmelze mit einem Schmelzpunkt, der niedriger oder gleich ist wie der von Aluminium, verwendet; besonders bevorzugt sind Schmelzen von Aluminium (z.B. technisch reinem, d.h. 99,7% Aluminium) oder Aluminium-Legierungen. Besonders bevorzugt ist das Gussverfahren ein Druckgussverfahren; denkbar ist beispielsweise aber auch ein Feingussverfahren. Die Verwendung eines Gussverfahrens mit Schmelzinfiltration hat den Vorteil, dass mittels des darin enthaltenen organischen Materials genau festgelegt werden kann, welche Oberflächenbeschaffenheit und welche Porenstruktur der offenporöse Festkörper besitzt. Ferner können Gradienten in der Porenstruktur eingestellt werden, Kanäle, die den offenporösen Festkörper durchlaufen, ausgespart werden und massive Strukturelemente, die der mechanischen Stabilität des offenporösen Festkörpers bzw. des Adsorberelements dienen, vorgesehen werden. Eine bevorzugte Methode der Herstellung des offenporösen Festkörpers mittels eines Druckgussverfahrens besteht darin, den zu infiltrierenden Polymerkörper in eine der Hälften der Gusskavität in der metallischen Dauerform der Druckgussanlage einzulegen und anschließend mit modifizierten Parametern des Druckgussprozesses zu infiltrieren. Bevorzugt sind Ausbuchtungen und Befestigungselemente für etwaige Dampftransportkanäle sowie Ausbuchtungen für rillenförmige oder dellenförmige Vertiefungen oder andere Strukturierungen der Festkörperoberfläche in der Gussform enthalten. Es ist dabei auch denkbar, den offenporösen Festkörper bzw. das Adsorberelement aus mehreren jeweils mittels eines Druckgussverfahrens hergestellten Teilen herzustellen. Bevorzugt wird das Druckgussverfahren aber so durchgeführt, dass der offenporöse Festkörper (gegebenenfalls mit darin enthaltenen Strukturelementen) einstückig hergestellt wird.
Ein offenporöser metallhaltiger Festkörper kann auch durch ein Versintern metallischer oder metallhaltiger Fasern erhalten werden. Als Metallfasern sind grundsätzlich Fasern aus allen Metallen geeignet. Es sollten daher Fasern mit möglichst hoher Wärmeleitfähigkeit ausgewählt werden. Beispielhaft seien Fasern aus einer AlCuZn-Legierung genannt. Auch hierbei können Kanäle dadurch vorgesehen werden, dass entsprechend geformte organische Materialien, die später ausgeschmolzen werden können, während des strukturbildenden Sintervorgangs als Platzhalter enthalten sind. Eine Alternative Art, Kanäle einzubringen, ist es, Fasern auf einer Form zu verrieseln, deren Oberfläche bereits ein Negativ der gewünschten Strukturen enthält, und diese vorgeformte Fasermatte dann zu versintern. Auch hier können massive Strukturelemente durch Einbringen entsprechender massiver Bauteile (insbesondere Metallteile) erhalten werden. Bei Verwendung kurzer Fasern im Längenbereich von 3 bis 25 Millimeter lässt sich eine Anisotropie der offenporösen Festkörperstruktur einstellen, die zu verringerten Strömungsverlusten führt und damit vorteilhaft für die Beladung des Elements sein kann (insbesondere werden die Strömungsverluste in Längsrichtung bei quaderförmigen Adsorberelementen verringert).

In einer vorteilhaften Ausgestaltung weist der im erfindungsgemäßen Adsorberelement enthaltene wärmeleitende offenporige Festkörper eine möglichst hohe spezifische Oberfläche auf. Dies gewährleistet, dass der Wärmetransport vom Sorptionsmaterial über den offenporösen Festkörper zum fluiddichten Folienverbund und deren Wärmeträgerfluid besonders effizient erfolgen kann. Bevorzugt ist daher die spezifische Oberfläche des offenporösen Festkörpers größer als 2.500 m²/m³, besonders bevorzugt größer als 10.000 m²/m³ und ganz besonders bevorzugt größer als 25.000 m²/m³. Die spezifische Oberfläche wird hierbei mittels Röntgen-Computertomographie und nachfolgender Bildanalyse bestimmt.
Besitzt der wärmeleitende offenporigeFestkörper eine mit Sorptionsmaterial beschichtete äußere Oberfläche die derart strukturiert ist, dass diese strukturierte äußere Oberfläche mindestens um den Faktor 1,4 größer ist als die die äußere Oberfläche bildende Ebene des korrespondierenden ebenen Körpers, so weist auch der auf diese strukturierte Oberfläche entfallende Anteil der spezifischen Oberfläche einen gegenüber dem ebenen Körper um diesen Faktor erhöhten Wert auf.

Erfindungsgemäß ist es also bevorzugt, dass der wärmeleitende offenporige Festkörper von einem oder mehreren Transportkanälen für das Adsorptiv durchzogen ist; diese sollten mindestens einen solchen Durchmesser haben, dass darin auch bei dem geringsten anwendungsrelevanten Dampfdruck noch eine gerichtete Strömung vorherrscht, also keine Knudsen-Diffusion. In einer besonders bevorzugten Ausprägung, insbesondere, wenn das Konstruktionsprinzip der Adsorberelemente daran orientiert ist, dass der fluiddichte Folienverbund primär als Begrenzung für die Struktureinheit Adsorptiv/Sorptionsmaterial/wärmeleitender offenporiger Festkörper verstanden wird, verzweigen sich die Transportkanäle in einer fraktalen Struktur, wie sie aus der Lösung von Strömungsproblemen in der Natur (z.B. in Blättern von Pflanzen, siehe z.B. Strasburger Lehrbuch der Botanik, ISBN 3827413885, Spektrum Akademischer Verlag, 2002.) bekannt ist. Die fraktale Kanalstruktur für den Transport kann z.B. bei einer Herstellung des offenporösen Festkörpers mittels eines Gussverfahrens in die Gussform eingeprägt sein.

Die erfindungsgemäße Adsorptionswärmepumpe bzw. Adsorptionskältemaschine enthält mindestens ein Adsorberelement, das einen wärmeleitenden offenporigen Festkörper und ein auf der Oberfläche dieses Festkörpers angeordnetes Sorptionsmaterial für ein dampfförmiges Adsorptiv umfasst, wobei auf der Außenfläche des wärmeleitenden offenporigen Festkörpers zumindest in den Bereichen, in denen ein Kontakt mit einem Wärmeträgerfluid vorgesehen ist, ein fluiddichter Folienverbund angeordnet ist. Dabei ist das mindestens eine Adsorberelement derart ausgebildet, dass der Wärmeaustausch zwischen dem wärmeleitenden offenporigen Festkörper und dem Wärmeträgerfluid über den fluiddichten Folienverbund erfolgen kann. Üblicherweise enthält die erfindungsgemäße Adsorptions-Wärmepumpe oder Adsorptions-Kältemaschine weiterhin einen Verdampfer, einen Kondensator (wobei auch ein Bauteil möglich ist, das sowohl als Verdampfer als auch als Kondensator fungiert).
Ist das Konstruktionsprinzip der einzelnen Adsorberelemente bzw. der Wärmepumpe oder Kältemaschine daran orientiert ist, dass der fluiddichte Folienverbund primär als Begrenzung für die Struktureinheit Adsorptiv/Sorptionsmaterial/wärmeleitender Festkörper verstanden wird, so weist die Wärmepumpe oder Kältemaschine üblicherweise auch einen vakuumdichten (zumindest aber fluiddichten) Adsorptivkanal auf, der über Anschlüsse mit dem Adsorberelement, dem Verdampfer und dem Kondensator verbunden sind. Die fluiddicht verpackten Adsorberelemente werden dann üblicherweise so in einem Behältnis angeordnet, dass sie möglichst vollflächig vom Wärmeträgerfluid umströmt werden und das Behältnis den Raum den das Wärmeträgerfluid einnimmt begrenzt.
Ist das Konstruktionsprinzip dagegen daran orientiert, dass der fluiddichte Folienverbund primär als Begrenzung für die Struktureinheit Wärmeträgerfluid verstanden wird, so ist ein Adsorptivkanal nicht unbedingt erforderlich. Auf den Adsorptivkanal kann insbesondere dann verzichtet werden, wenn das mindestens eine Adsorberelement, der Kondensator und der Verdampfer in derselben Hülle (bzw. demselben Gehäuse) angeordnet sind, da der Dampf des Adsorptivs das Adsorberelement von allen Seiten her anströmen kann. Die Adsorberelemente werden dann üblicherweise so in einem Behältnis angeordnet, dass das dampfförmige Adsorptiv möglichst einfach mit dem auf der Oberfläche des wärmeleitenden offenporigen Festkörpers angeordneten Sorptionsmaterial in Kontakt treten kann und das Behältnis den Raum den das dampfförmige Adsorptiv einnimmt begrenzt.
Die Adsorberelemente bzw. der auf deren Außenfläche aufgebrachte fluiddichte Folienverbund werden während des Betriebs der Wärmepumpe oder Kältemaschine mit dem Wärmeträgerfluid (z.B. Wasser, einem Wasser-Glykol-Gemisch oder im Falle einer Zweiphasenströmung z.B. auch Methanol) umspült und so während der Desorptionsphase geheizt und während der Adsorptionsphase gekühlt.
Ein bevorzugter Einsatz der erfindungsgemäßen Adsorberelemente ist die Verwendung in einer Adsorptionskältemaschine oder Adsorptionswärmepumpe, in der im Wärmeträgerfluid ein wandernder Temperaturgradient ("thermal wave") erzeugt wird. Hierfür ist eine Anordnung mit mindestens zwei Adsorbereinheiten, die jeweils zumindest teilweise die erfindungsgemäßen Adsorberelemente enthalten, erforderlich. Mit diesen "thermal wave "-Verfahren kann ein Großteil der in der thermischen Masse der Adsorbereinheiten bzw. Adsorberelemente gespeicherten sensiblen Wärme zwischen beiden Adsorbereinheiten ausgetauscht werden. Am Ende dieses "thermal wave"-Prozesses haben nicht beide Adsorber dieselbe mittlere Temperatur, sondern der ursprünglich heiße Adsorber (der zuvor desorbiert wurde) hat eine deutlich niedrigere Temperatur als der ursprünglich kalte Adsorber (der zuvor adsorbiert hat). Das "thermal wave "-Verfahren ist z.B. in der US 4,610,148 und der US 4,694,659 offenbart. Zur Realisierung des "thermal wave"-Prozesses wurden in der Vergangenheit verschiedenste Vorschläge gemacht. Bisher wurde allerdings keine Anordnung der Adsorberelemente vorgeschlagen, die dieses "thermal wave"-Prinzip realisiert und die einen einfachen, störungsunanfälligen und kostengünstigen Adsorberbau ermöglicht. Mit einer Wärmepumpe oder Kältemaschine, in der die erfindungsgemäßen Adsorberelemente in Reihe geschaltet sind, ist dies nun erstmals möglich; es ist daher erstmals eine effiziente Wärmerückgewinnung nach dem "thermal wave"-Prinzip realisierbar.

In einer vorteilhaften Ausgestaltung für die Variante, bei der der fluiddichte Folienverbund primär als Begrenzung für die Struktureinheit Adsorptiv/Sorptionsmaterial/wärmeleitender offenporiger Festkörper verstanden wird, sind jeweils zwei benachbarte Adsorberelemente der erfindungsgemäßen Wärmepumpe oder Kältemaschine mittels mindestens eines Adsorptivkanals verbunden, wobei mindestens ein Adsorptivkanal, mit dem zwei benachbarte Adsorberelemente verbunden sind, auf einer Achse angeordnet ist, auf der sich weitere Adsorptivkanäle weiterer Adsorberelementpaare befinden. Bevorzugt befinden sich alle oder zumindest die meisten Adsorptivkanäle auf derartigen Achsen, die durch den gesamten Adsorberelementstapel verlaufen.
Eine derartige Anordnung hat den Vorteil, dass für den vakuumdichten Anschluss der Adsorptivkanäle an die Adsorberelemente nur ein Zusammenpressen des Stapels aus Adsorberelementen und Adsorptivkanälen längs der Achse der Adsorptivkanäle notwendig ist. Zusätzlich können hierbei Dichtungselemente vorgesehen werden, die bei Ausübung von Druck längs der Adsorptivkanalachse abdichten. Weiterhin sind in derartigen Adsorberelement/Adsorptivkanal-Stapeln (mit oder ohne Dichtungselemente) die Adsorberelemente bevorzugt so ausgeführt, dass an den Stellen, an denen (durch das Zusammenpressen des Stapels) der Anpressdruck entsteht, mechanisch so stabil sind, dass sie diesem Anpressdruck Stand halten.
Um den vakuumdichten Anschluss der Adsorptivkanäle an die Adsorberelemente im vorstehend beschriebenen Adsorptivkanal/Adsorberelement-Stapel zu erreichen bzw. den hierfür nötigen Anpressdruck zu erzeugen, kann in der erfindungsgemäßen Wärmepumpe oder Kältemaschine ein Halterungselement vorgesehen werden, das innerhalb der Adsorberelemente durch die auf einer Achse angeordneten Adsorptivkanäle verläuft. Alternativ kann das Halterungselement auch ganz außerhalb der Adsorberelemente verlaufen. An den Enden dieses Halterungselements müssen Mittel vorgesehen sein, mit denen der benötigte Anpressdruck erzeugt werden kann, so dass die vakuumdichte Verbindung von Adsorptivkanälen und Adsorberelementen realisiert werden kann.

In einer weiteren vorteilhaften Ausgestaltung befinden sich zwischen zwei benachbarten Adsorberelementen zwei oder bevorzugt drei oder mehr Adsorptivkanäle, die nicht auf einer Gerade liegen. Wenn jedes Adsorberelement eines Adsorberelements/Adsorptivkanal-Stapels an mindestens drei Dampfkanäle (bzw., wenn beide Seiten eines Adsorberelements gezählt werden, sechs Dampfkanäle) angeschlossen ist, die nicht auf einer quer zum Stapel verlaufenden Gerade liegen, so wird die Gefahr von Undichtigkeiten des Adsorberelements/Adsorptivkanal-Stapels aufgrund des Verkantens einzelner Adsorberelemente stark reduziert.

In einer weiteren bevorzugten Ausführungsform enthalten die erfindungsgemäßen Wärmepumpen oder Kältemaschinen zumindest teilweise Adsorberelemente, die eine geometrische Form nach Art eines Quaders besitzen. Bevorzugt ist der mittlere Abstand zweier benachbarter derartiger Adsorberelemente geringer als der mittlere Abstand des sich gegenüberliegenden ersten Flächenpaars des geometrischen Körpers nach Art eines Quaders (der wiederum geringer ist als der Abstand des zweiten und dritten sich gegenüberliegenden Flächenpaars des geometrischen Körpers nach Art eines Quaders). Besonders bevorzugt ist der mittlere Abstand kleiner als 20 mm . Dieser Abstand kann z.B. mittels Abstandshaltern (beispielsweise auch in Form von Adsorptivkanälen und/oder Dichtungselementen) eingestellt werden; diese sind allerdings nicht unbedingt erforderlich, wenn der Folienverbund eine geometrische Form nach Art einer Manschette oder eines Schlauches besitzt.
Je geringer der Abstand benachbarter Adsorberelemente ist, desto höher ist die Tendenz zur Ausbildung einer turbulenten Strömung im Wärmeträgerfluid und desto besser ist der Wärmeübergang vom Adsorberelement zum Wärmeträgerfluid. Allerdings wird dabei auch der Druckverlust im Hydraulikkreis des Wärmeträgerfluids höher. Üblicherweise ist daher eine mittlere Spaltbreite von 0,5 mm bis 5 mm sinnvoll. Bei speziellen Ausgestaltungen ist kann diese auch größer (bis zu 30 mm) sein. Wird ein Folienverbund mit einer geometrischen Form nach Art einer Manschette oder eines Schlauches eingesetzt, so wird durch eine äußere Einfassung des Adsorberelements bzw. einen Stapel derselben bestimmt, wie weit sich der Folienbeutel aufblähen kann. In einer besonders bevorzugten Ausgestaltung dieser Variante werden die Adsorberelemente durch einen äußeren stabilen Rahmen derart zusammengepresst, dass die Folienbeutel bzw. der Folienschlauch zwischen je zwei Adsorberelementen eingeklemmt sind und sich nur im Bereich der Aussparungen im Festkörper der Adsorberelemente im Beutel/Schlauch Kanäle für das Wärmeträgerfluid ausbilden können. Zwar wird der Druckverlust hier im allgemeinen größer sein als im Fall einer vollflächigen Umströmung, aber die Strömungsverteilung lässt sich wesentlich genauer kontrollieren und die Gesamtmenge an Wärmeträgerfluid im Adsorberkreis kann reduziert werden..

In den erfindungsgemäßen Wärmepumpen oder Kältemaschinen sind bevorzugt mehrere Adsorberelemente, besonders bevorzugt ausschließlich Adsorberelemente, enthalten, die seriell und/oder parallel von Wärmeträgerfluid angeströmt werden oder angeströmt werden können. Besonders bevorzugt besitzen die Adsorberelemente dann eine Geometrie nach Art eines Quaders, ganz besonders bevorzugt sind sie plattenförmig.

Bei einer vorteilhaften Variante sind die Adsorberelemente in der erfindungsgemäßen Wärmepumpe oder Kältemaschine in Form eines Adsorberlementstapels nach Art eines Kamms angeordnet. Im "Rücken" des Kamms kann dabei der Absorptivkanal (durch den die Zuführung des dampfförmigen Adsorptivs zu den Adsorberelementen erfolgt) verlaufen. Dies ist insbesondere sinnvoll, wenn das Wärmeträgerfluid nicht einen Folienverbund eine geometrische Form nach Art einer Manschette oder eines Schlauches durchströmt. Ein serielles Anströmen der Adsorberelemente durch das Wärmeträgerfluid kann hier besonders einfach realisiert werden. Hierbei werden zwei Adsorberelementstapel nach Art eines Kamms so zueinander positioniert, dass die "Spitzen" der Kämme ineinander greifen und das Wärmeträgerfluid diese Anordnung daher mäanderförmig durchströmen kann. Zusätzlich können die Adsorberelementstapel - auch bei paralleler Umströmung - zumindest teilweise (bevorzugt ausschließlich) jeweils benachbarte Adsorberelemente mit rillen- und/oder dellen- und/oder schlitzförmigen Vertiefungen enthalten, die so angeordnet sind, dass die zwischen zwei Vertiefungen liegenden Erhebungen des einen Adsorberelements in die Vertiefungen des benachbarten Adsorberelements mit gleichartiger Oberflächenstruktur eingreifen können, so dass auch diese benachbarten Adsorberelemente nach Art zweier Kämme ineinander greifen.

Wird ein Folienverbund mit einer geometrischen Form nach Art einer Manschette oder eines Schlauches in einer Anordnung eingesetzt, bei der zwei Adsorberelementstapel nach Art eines Kamms so positioniert sind, dass das Wärmeträgerfluid die Anordnung mäanderförmig durchströmen kann, so kann dieser Schlauch zwischen den Adsorberelementstapeln wie ein Leporello angeordnet sein. Dieselbe Anordnung ist auch möglich, wenn die Adsorberelemente nur nach Art eines Papierstapels übereinander angeordnet sind. In beiden Fällen können längs der Seiten des Adsorberelements, an denen das " Leporello" eine Biegung bzw. Umlenkstelle aufweist, entlang der Biegung bzw. Umlenkstelle verlaufende (z.B. röhrenförmige) Adsorptivkanäle angeordnet sein. Hierdurch ist es einerseits möglich, an den Biegungen bzw. Umlenkstellen den Wärmeträgerfluidschlauch gegen Verletzungen (etwa beim Einbau) zu schützen, andererseits ist, insbesondere bei offenporigen Festkörpern, eine noch bessere Verteilung des Adsorptivs möglich.
Eine ähnlich vorteilhafte Anordnung kann bei Adsorberelementen mit spiralförmiger Geometrie (d.h. dass sich das Adsorberelement von einer "aufgewickelten" Platte ableitet) realisiert werden, indem zwischen den Spiralästen ein Wärmeträgerfluidschlauch angeordnet wird, der dann ebenfalls spiralförmig ist.
Auch unabhängig von der Verwendung eines Folienverbunds mit einer geometrischen Form nach Art einer Manschette oder eines Schlauches werden durch die Spiralform spezielle Fluidführungen möglich, die zu einem geringen Gesamt-Druckverlust bei der Durchströmung des Adsorberelements mit dem Wärmeträgerfluid führen und die im Folgenden beschrieben werden sollen: Vorteilhafterweise befinden sich an den spiralförmig eingerollten Kanten des Adsorberelements Sammelkanäle des Wärmeträgerfluids, die einen wesentlich größeren Strömungsquerschnitt aufweisen als die im Wesentlichen senkrecht dazu verlaufenden, in die Oberfläche des Festkörpers eingeprägten Kanäle für das Wärmeträgerfluid. Um einen Wicklungsabstand zu erreichen, der geringer ist als der Durchmesser der Sammelkanäle, kann eine schräge Wicklung des Adsorberelementes und / oder eine geometrische Form des Adsorberelementes mit nicht parallel verlaufenden Kanten gewählt werden. In einer weiter vorteilhaften Ausgestaltung hat ein derartiges Adsorberelement eine die Grundform eines Trapezes und wird von der breiteren Seite aus zur schmaleren Seite hin aufgerollt, so dass sich ein sich in der Mitte verdickender Zylinder ergibt. Um eine gleichmäßige Durchströmung der gesamten Fläche der Platte zu erreichen, ist der Strömungsquerschnitt der in die Oberfläche des Festkörpers eingeprägten Kanäle in der Nähe der schmaleren Kante kleiner zu wählen als in der Nähe der längeren Kante, so dass der Druckverlust dieser Kanäle bei gleichem Volumenstrom etwa gleich groß ist.

Bevorzugt sollte sowohl bei der seriellen als auch bei der parallelen Umströmung der Adsorberelemente die die Adsorberelementstapel umgebende Wanne eine möglichst geringe Wärmekapazität aufweisen, also für ein gegebenes Material ein möglichst geringes Gewicht besitzen. Generell werden die erfindungsgemäßen Wärmepumpen bzw. Kältemaschinen bevorzugt so konstruiert, dass der Massenanteil des Adsorbens gegenüber dem Anteil der inerten Masse, die unter Aufwendung sensibler Wärme thermisch zykliert werden muss, zu maximieren.

Die erfindungsgemäßen Wärmepumpen und Kältemaschinen können selbstverständlich neben der oben beschriebenen kammförmigen Anordnung von Adsorberelementstapeln auch zusätzlich anders angeordnete Gruppen von Adsorberelementen enthalten; sie kann außerdem auch mehrere zusammengeschaltete Adsorbereinheiten (d.h. Einheiten aus jeweils zwei oder mehr Adsorberelementstapeln oder anders angeordneten Gruppen von Adsorberelementen) nach den vorstehend beschriebenen Prinzipien aufweisen. Prinzipiell sind alle nach dem Stand der Technik bekannten Varianten zur Verschaltung mehrerer Adsorberelementeinheiten möglich (vgl. z.B. M.A. Lambert et al. "A Review of Solid-Vapor Adsorption Heat Pumps", 41st AIAA Aerospace Sciences Meeting and Exhibit, 2003, Reno, Nevada, 2003-0514).

Die vorliegende Erfindung wird - ohne Einschränkung der Allgemeinheit - nachfolgend noch näher anhand von Zeichnungen erläutert.

Es zeigen:
Fig. 1: Ausschnitt aus einem profilierten Adsorberelement.
Fig. 2: Ausschnitt aus einem Adsorberelement, in dem der Folienverbund nach Art eines Schlauches oder einer Manschette bzw. eines Beutels vorliegt
Fig. 3: Kombination eines Adsorberelements auf Basis eines wärmeleitenden offenporigen Festkörpers mit einem Adsorberelement auf Basis eines massiven wärmeleitenden Festkörpers
Fig. 4: Schnitt durch ein Adsorberelement, bei dem ein wärmeleitender offenporiger Festkörpers mit einem massiven wärmeleitenden Festkörper kombiniert sind
Fig. 5: den Aufbau einer Adsorbereinheit zur Realisierung einer "thermal wave" in der Aufsicht.
Fig. 6: einen weiteren Aufbau zur Realisierung einer "thermal wave".
Fig. 7a und 7b: das Aufbringen eines Folienverbundes auf einen z.B. offenporösen Festkörper und einen Adsorptivkanal und den Verlauf der Schweißnähte bei einem hieraus gebildeten Adsorberelementstapel, bei dem die einzelnen Adsorberelemente nach Art eines Kamms angeordnet sind.
Fig. 8a und Fig. 8b zeigen ein bzw. zwei Adsorberelemente mit einer Oberflächenstruktur von ineinander greifenden rillenförmigen Vertiefungen.

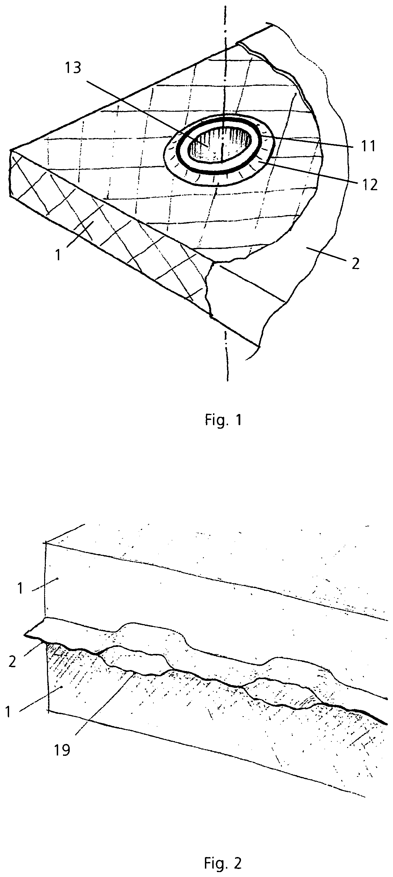

In Fig. 1 ist ein Ausschnitt aus einem Adsorberelement zu sehen, bei dem ein offenporöser Festkörper (1) z.B. mittels eines Vakuumverpackungsprozesses mit einem Folienverbund (2) verpackt (z.B. eingeschweißt) wurde. Zum Anschluss von Adsorptivkanälen (24) ist in diesem Adsorberelement eine Profilierung (12) in Form einer kreisförmigen Kerbe bzw. Rille vorgesehen. In diese Rille kann ein Dichtungselement (11) in Form eines Rings eingelegt werden, damit mit dem Adsorptivkanal (24) bei Anlegen eines Anpressdrucks ein vakuumdichter Abschluss erzeugt werden kann. Im Zentrum der Profilierung (12) wurde ein Loch (13) in den offenporösen Festkörper (1) gebohrt, um eine bessere Verteilung des dampfförmigen Adsorptivs im Adsorberelement bzw. im offenporösen Festkörper, der mit dem Sorptionsmaterial beschichtet ist, zu ermöglichen. Weiterhin kann durch das Loch (13) ein Befestigungselement geführt werden, mittels dem der Anpressdruck zum Erreichen eines vakuumdichten Abschlusses zwischen Adsorberelementen und Adsorptivkanälen angelegt werden kann.

Fig. 2: zeigt Ausschnitt aus einem Adsorberelement, bei dem zwischen zwei Lagen eines offenporösen Festkörpers (1) ein Folienverbund (2) mit einer geometrischen Form nach Art eines Schlauches oder einer Manschette (der allerdings nur in Form von zwei Lagen des Folienverbunds zu erkennen ist) angeordnet wurde. Die verbliebenen noch nicht miteinander verbundenen (Schnitt)kanten des Folienverbunds (2) ragen hier aus dem Festkörper (1) heraus, und sind außer in dem Bereich der Anschlüsse (19) für das Wärmeträgerfluid ebenfalls miteinander versiegelt, so dass der Folienverbund die Form eines Beutels besitzt. Über die Anschlüsse (19) kann das Wärmeträgerfluid in den Beutel einströmen bzw. aus ihm herausströmen.

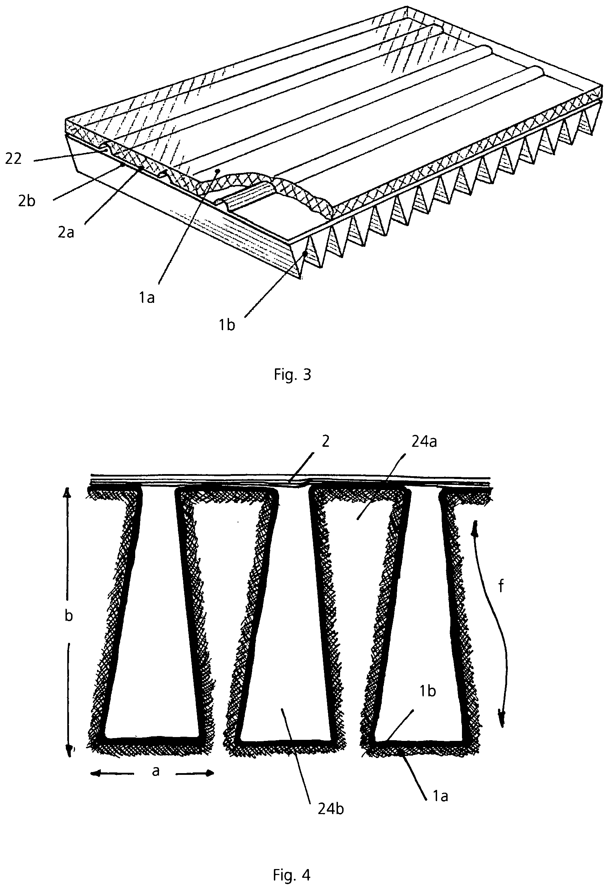

Fig. 3 zeigt eine Kombination eines Adsorberelements auf Basis eines wärmeleitenden offenporösen Festkörpers mit einem Adsorberelement auf Basis eines massiven wärmeleitenden Festkörpers. In einen offenporösen wärmeleitenden Festkörper (1a) sind auf der dem fluiddichten Folienverbund (2a) zugewandten Seite rillenartige Vertiefungen vorgesehen. Der Folienverbund (2a) wurde auf den offenporösen wärmeleitenden Festkörper (1a) so aufgebracht, dass er sich an dessen Oberflächenstruktur anschmiegt oder wurde alternativ vorher so strukturiert, dass die Oberflächenstruktur der des offenporösen Festkörpers (1a) entspricht. Weiterhin wurde ein massiver Festkörper (1b) auf seiner vom fluiddichten Folienverbund (2b) abgewandten Seite so strukturiert, dass ein Sägezahnprofil entstand. Auf dieser Seite ist eine Beschichtung mit einem Sorptionsmaterial angeordnet. Ebenso ist auf der inneren und äußeren Oberfläche des offenporösen Festkörpers (1a) Sorptionsmaterial angeordnet. Alternativ kann auch als massiver Festkörper (1b) ein Blech verwendet werden, das so "gefaltet" wird, dass ein Sägezahnprofil entsteht. Auf der dem fluiddichten Folienverbund (2b) zugewandten Seite des massiver Festkörpers (1b) wird dann der Folienverbund (2b) aufgebracht. Zwischen den Lagen (2a) und (2b) des Folienverbunds (die auch an den beiden sich gegenüberliegenden längeren Seiten jeweils an den aufeinanderliegenden (Schnitt)kanten miteinander verbunden sein können, so dass ein Folienverbunds mit einer geometrischen Form nach Art einer Manschette oder eines Schlauches vorliegt) bleibt ein Kanal (22) für das Wärmeträgerfluid bestehen, wobei letzteres im Wesentlichen durch die rillenartigen Vertiefungen fließt.

Fig.4 zeigt einen Schnitt durch ein Adsorberelement, bei dem ein wärmeleitender offenporiger Festkörpers mit einem massiven wärmeleitenden Festkörper kombiniert sind. Der Schnitt ergibt hier eine Art Rechtecksprofil. Ein massiver wärmeleitender Festkörper (1b) mit einer Dicke d (bevorzugte Stärke 15µm bis 250µm) ist mit einer dünnen Schicht von Fasern aus demselben Grundmaterial beschichtet, bevorzugt versintert oder verlötet (die Schichtdicke e der Fasern liegt bevorzugt im Bereich d<e<10*d), so dass auf dem Festkörper (1b) ein offenporöser Festkörper (1a) angeordnet ist. Die wellblechartige Struktur des Festkörpers (1a/1b) wurde erhalten, in dem ein ebenes Festkörperblech derart gefaltet wird, dass sich zum Folienverbund hin Stege der Breite a ergeben. Die Höhe b der gefalteten Struktur ist deutlich größer als a, bevorzugt im Bereich 3*a<b<30*a. Das optimale Seitenverhältnis hängt auch von der Stärke der Faserschicht im Verhältnis zur Blechstärke (e:d) ab. Auf den unbeschichteten Stegen ist ein Folienverbund (2) (hier dreischichtig dargestellt; nicht maßstabsgetreu) angeordnet, der mit dem massiven Festkörper (1b) in der Regel stoffschlüssig verbunden ist.
Die Wärmeleitfähigkeit in Richtung f kann wesentlich höher sein als bei einem homogenem offenporösen Festkörper (z.B. der Faserstruktur oder 1a in Fig.2) und hängt im Wesentlichen vom Verhältnis der Blechstärke d zum Faltungsabstand a ab. Das Verhältnis der Wärmeleitfähigkeit (in der Vorzugsrichtung) des so erhaltenen Festkörpers zu einem massiven Festkörper aus dem Bulk-Material des massiven Festkörpers (1b) ist mindestens 2d/a. Die Faserschicht bzw. der offenporöse Festkörper (1a) verbessert die Wärmeleitung zusätzlich. Die Faserschicht (1a) trägt entscheidend zur mechanischen Stabilisierung des Festkörpers (insbes. Biegesteifigkeit) bei, da dieser die Druckdifferenz zwischen dem innerhalb eines aus der Verbundfolie (2) gebildeten Beutels strömenden Wärmeträgerfluid und dem Adsorptiv-Dampfdruck auf der anderen Folienseite aufnehmen muss. Diese Druckdifferenz beträgt typischerweise zwischen 1,5 bar und 4 bar für Niederdruck-Adsorptive (Wasser, Methanol). Die Druckstabilität des so erhaltenen Festkörpers bei Belastung in Richtung f kann ebenfalls wesentlich höher sein als bei einem homogenen porösen Festkörper gleicher Porosität bzw. effektiver Dichte. Dies ermöglicht eine hohe Porosität und spezifische Oberfläche des Festkörpers, wodurch mehr Sorptionsmaterial eingebracht werden kann und sich das Wärmeverhältnis sorptiv/sensibel zugunsten eines höheren COP erhöht. Die Hohlräume schaffen hindernisfreie Strömungskanäle (24a und 24b) für den Dampf des Adsorptivs und verhindern somit, dass die Adsorptionskinetik durch die Dampfdiffusion limitiert wird. Zudem ermöglichen Sie es, ohne Dampftransportlimitierung relativ breite Adsorberelemente herzustellen. Durch den großflächigen Kontakt des Folienverbunds mit den nicht mit Fasern beschichteten Stegen wird der Wärmeübergang vom Festkörper (1b) zu Folie stark verbessert und ist insbesondere wesentlich besser als bei einem homogenen porösen Festkörper (1a in Fig.2).

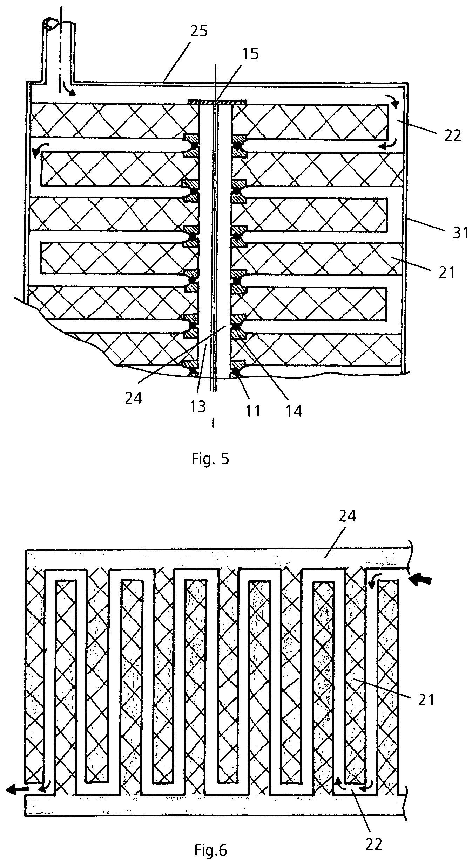

Fig. 5 zeigt einen Aufbau einer Adsorbereinheit zur Realisierung einer "thermal wave" in der Aufsicht. Die Adsorberelemente (21) sind zu zwei Adsorberelementstapeln zusammengefasst, die zusammen mit der Begrenzung (31) jeweils einen Adsorberelementstapel nach Art eines Kamms bilden. Die jeweils benachbarten Adsorberelemente (21) aus den beiden Adsorberelementstapeln weisen einen geringen Abstand voneinander auf, so dass die auf einer Achse zwischen den Adsorberelementen angeordneten Adsorptivkanäle (24) nur sehr kurz sind (und im Wesentlichen durch das Dichtungselement (11) gebildet werden). Die zwei kammartigen Adsorberelementstapel sind in eine Wanne (25) eingefügt (deren Seitenwände die rückwärtige Begrenzung (31) des kammartigen Adsorberelementstapels bilden), durch die das Wärmeträgerfluid strömt. Durch die alternierende Anordnung der Adsorberelementstapel, die dem Wärmeträgerfluid jeweils nur an einer Seite der Wanne Platz zum Vorbeiströmen lässt, muss das Fluid durch einen mäanderförmigen Kanal (22) zwischen allen Adsorberelementen nacheinander hindurch strömen. Dadurch kann sich ein Temperaturgradient entlang der Wärmeträgerfluidkanalachse einstellen und so eine "thermal wave" realisiert werden. Durch die gesamte Anordnung aus Adsorberelementen (21) und Adsorptivkanälen (24) verläuft ein Halterungselement (15) (z.B. eine Gewindestange); in jedem offenporösen Festkörper (1) ist ein Loch (13) vorgesehen, das sich im Zentrum der Profilierung (12) für ein Dichtungselement (11) befindet. Durch die Adsorptivkanäle (24) und die in den offenporösen Festkörpern (1) vorgesehenen Löcher (13) kann Adsorptiv in die offenporösen Festkörper (1) strömen.

In Fig. 6 sind die Adsorberelemente (21) ebenfalls zu einem Adsorberelementstapel nach Art eines Kamms angeordnet. Hier verläuft der Adsorptivkanal (24) im "Rücken" des Kamms. Die Kämme sind so ineinander geschoben, dass ein mäandernder Kanal für das Wärmeträgerfluid (22) resultiert. Hierfür werden die einzelnen Adsorberelemente parallel zueinander mit den Schmalseiten auf den Adsorptivkanal aufgebracht, der z.B. aus einer geeignet durchbohrten Aluminiumdoppelstegplatte bestehen kann. Die Abstände zwischen den Platten werden so groß gewählt, dass ein zweiter, baugleicher "Kamm" spiegelbildlich in den ersten hinein geschoben kann. Die Kämme können entweder in einen fluiddichten Folienverbund (der hier nicht gezeigt ist) eingepackt sein (vgl. Fig. 6a und 6b) alternativ kann in den Kanal (22) ein schlauchförmiger Folienverbund (der hier nicht gezeigt ist) eingebracht werden, so dass letzterer leporelloförmig angeordnet ist. Zwischen den zwei derart ineinander geschobenen Kämmen verläuft dann der Kanal für das Wärmeträgerfluid (22). Werden die beiden Kämme so weit ineinander geschoben, dass sie sich gegenseitig berühren, so bleiben zwischen den Adsorberelementen nur parallele Schlitze bestehen. In diesem Fall ist dann ein paralleles Anströmen der Adsorberelemente realisiert. Wird ein schlauchförmiger Folienverbund verwendet, so muss der Schlauch zwischen je zwei Adsorberelementen noch je einen Anschluss für Zufluss und Abfluss des Wärmeträgerfluids aufweisen,
In jedem Fall werden die beiden Kämme in einer geeigneten Wanne für das Wärmeträgerfluid angeordnet und in ihrer Position fixiert. Die Kanäle für das dampfförmige Adsorptiv werden in geeigneter Weise (entsprechend dem Stand der Technik bei Adsorptionswärmepumpen) über geeignete Ventile mit Verdampfer bzw. Kondensator der Wärmepumpe verbunden. Dazu muss für jede einzelne Kammstruktur von Adsorberelementen nur an einer oder zwei Stellen (d.h. den " Enden" des Kamms) eine vakuumdichte Verbindung zwischen der fluiddichten Folie und einem weiteren massiven Bauteil (z.B. einem Aluminiumprofilteil) hergestellt werden. Ein derartiger serieller oder paralleler Aufbau ist sehr leicht und kostengünstig in Serienproduktion für Wärmepumpen und Kältemaschinen umsetzbar.

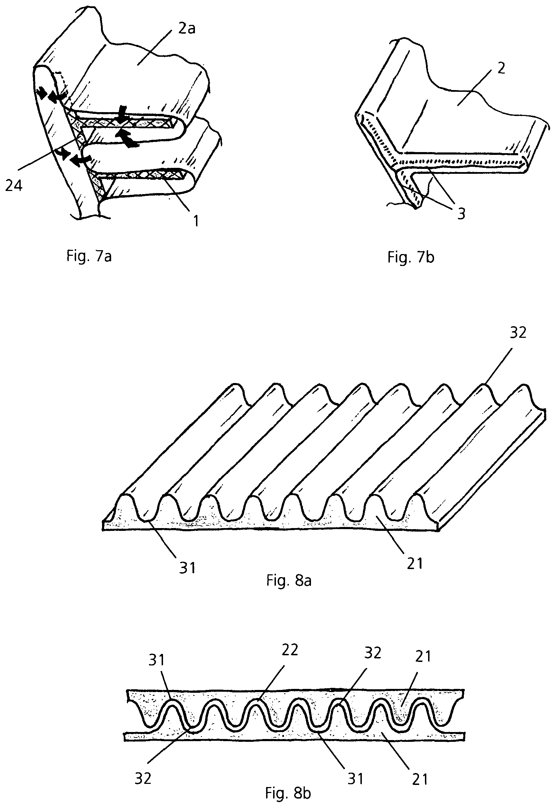

Fig. 7a zeigt das Aufbringen eines Folienverbunds auf wärmeleitende offenporige Festkörper und einen Adsorptivkanal. Hierbei wird ein Adsorberelementstapel nach Art eines Kamms (wie er z.B. in Fig. 5 gezeigt wird) in eine Bahn des Folienverbunds (2) eingeschlagen, die so viel breiter ist als die Kammstruktur, dass auf beiden Seiten des Kamms genug Platz zum Verschweißen des überstehenden Folienverbunds bleibt. Fig. 7b zeigt den Verlauf der Schweißnähte (3) des Folienverbunds (2) in einem Adsorberelementstapel nach Art eines Kamms. Die Adsorberelemente (d.h. der wärmeleitende offenporige Festkörper (1) und der Adsorptivkanal (24)) sind nach dem Verschweissen vollständig von dem fluiddichten Folienverbund (2) umschlossen. An den Stellen, an denen ein Adsorberelement auf den Sammelkanal trifft, stoßen dann zwei Schweißnähte T-förmig aneinander, d.h. es resultiert eine T-förmige vakuumdichte Verbindung.

Fig. 8a und Fig. 8b zeigen ein bzw. zwei Adsorberelemente (21), bei denen eine besonders gute Ausnutzung des Gesamtvolumens bei sehr kurzer thermischer Weglänge erreicht wird. Hierbei sind rillenförmigen Vertiefungen (31) in den Adsorberelementen (21) so angeordnet, dass die zwischen zwei Vertiefungen liegenden Erhebungen (32) in die Vertiefungen (31) eines benachbarten Adsorberelements (21) mit gleichartiger Oberflächenstruktur greifen kann, so dass die zwei benachbarten Adsorberelemente nach Art zweier Kämme ineinander greifen und zwischen den Adsorberelementen ein gewundener, bevorzugt auch schmaler Kanal für das Wärmeträgerfluid (22) frei bleibt. Wird ein schlauchförmiger Folienverbund verwendet, so muss der Schlauch zwischen je zwei Adsorberelementen noch je einen Anschluss für Zufluss und Abfluss des Wärmeträgerfluids aufweisen.

## Patentansprüche

1. Adsorberelement (21) für einen Wärmetauscher umfassend einen wärmeleitenden offenporigen Festkörper (1, 1a, 1b) und ein auf der inneren Oberfläche dieses Festkörpers (1, 1a, 1b) angeordnetes Sorptionsmaterial für ein dampfförmiges Adsorptiv,
**dadurch gekennzeichnet, dass** auf der Außenfläche des flächigen offenporigen Festkörpers (1, 1a, 1b) zumindest in den Bereichen, in denen ein Kontakt mit einem Wärmeträgerfluid vorgesehen ist, ein fluiddichter Folienverbund (2, 2a, 2b) angeordnet ist, der mit dem offenporigen Festkörper (1, 1a, 1b) formschlüssig, kraftschlüssig oder stoffschlüssig verbunden ist, wobei der Folienverbund (2, 2a, 2b)
- mindestens eine erste Schicht, die eine Metallschicht und/oder eine Schicht aus einem in senkrechter Orientierung zur Schicht wärmeleitenden Material ist und
- mindestens eine zweite Schicht, die eine Siegelschicht oder eine Trägerschicht ist, aufweist und wobei ferner das Adsorberelement (21) derart ausgebildet ist,
dass der Wärmeaustausch zwischen dem offenporigen Festkörper (1, 1a, 1b) und/oder dem auf diesem angeordneten Sorptionsmaterial und dem Wärmeträgerfluid über den fluiddichten Folienverbund (2, 2a, 2b) erfolgen kann.

2. Adsorberelement (21) nach Anspruch 1, **dadurch gekennzeichnet, dass** die innere Oberfläche des offenporösen Festkörpers (1, 1a, 1b) mit dem Sorptionsmaterial beschichtet ist und/oder dass die von der inneren Oberfläche des offenporösen Festkörpers (1, 1a, 1b) umgebenen Hohlräume das Sorptionsmaterial in loser Form enthalten.

3. Adsorberelement (21) nach Anspruch 1 oder 2, **dadurch gekennzeichnet, dass** das Sorptionsmaterial als Schicht auf der äußeren Oberfläche des wärmeleitenden Festkörpers (1, 1a, 1b) angeordnet ist, wobei diese Schicht die Bereiche der Festkörperoberfläche ganz oder teilweise bedeckt, in denen kein Kontakt mit dem Wärmeträgerfluid vorgesehen ist.

4. Adsorberelement (21) nach einem oder mehreren der vorhergehenden Ansprüche, **dadurch gekennzeichnet, dass**
der Folienverbund (2, 2a, 2b) mindestens eine Siegelschicht und mindestens eine Trägerschicht aufweist.

5. Adsorberelement (21) nach einem oder mehreren der vorhergehenden Ansprüche, **dadurch gekennzeichnet, dass**
der Folienverbund (2, 2a, 2b) mittels eines Binders mit dem offenporigen Festkörper (1, 1a, 1b) stoffschlüssig verbunden ist oder dass der Folienverbund (2, 2a, 2b) und der offenporige Festkörper (1, 1a, 1b) zumindest teilweise miteinander versintert sind.

6. Adsorberelement (21) nach einem oder mehreren der vorhergehenden Ansprüche, **dadurch gekennzeichnet, dass**
der Folienverbund (2, 2a, 2b) eine geometrische Form nach Art einer Manschette oder eines Schlauches besitzt, wobei ein oder mehrere Teilbereiche der äußeren Oberfläche des so vorliegenden Folienverbundes (2, 2a, 2b) mit dem wärmeleitenden Festkörper (1, 1a, 1b) formschlüssig, stoffschlüssig oder kraftschlüssig verbunden sind oder verbindbar sind.

7. Adsorberelement (21) nach Anspruch 1 **dadurch gekennzeichnet, dass**
eines oder beide der beiden offenen Enden der Manschette fluiddicht verschlossen sind, so dass ein Gebilde nach Art eines Beutels für Flüssigkeiten vorliegt und dass dieses Gebilde nach Art eines Beutels für Flüssigkeiten mindestens je einen Anschluss, durch den das Wärmeträgerfluid in den Beutel einströmen und einen Anschluss, durch den das Wärmeträgerfluid aus dem Beutel herausströmen kann, besitzt.

8. Adsorberelement nach einem oder mehreren der vorhergehenden Ansprüche, **dadurch gekennzeichnet, dass**
die Oberfläche des Folienverbunds (2, 2a, 2b) so strukturiert ist, dass der Transport des Wärmeträgerfluids in der flüssigen Phase zumindest teilweise mittels eines durch die Oberflächenstrukturierung bewirkten Kapillareffekts erfolgen kann.

9. Adsorberelement (21) nach einem oder mehreren der vorhergehenden Ansprüche, **dadurch gekennzeichnet, dass**
das Adsorberelement (21) eine geometrische Form nach Art eines Quaders oder nach Art eines Hohlzylinders besitzt.

10. Adsorberelement (21) nach einem oder mehreren der vorhergehenden Ansprüche, **dadurch gekennzeichnet, dass**
der offenporige Festkörper (1, 1a, 1b) aus einem Metall und/oder einer Keramik besteht oder ein Metall und/oder eine Keramik enthält.

11. Adsorberelement nach Anspruch 10, **dadurch gekennzeichnet, dass**
der aus Metall bestehende oder Metall enthaltende offenporige Festkörper (1, 1a, 1b) zumindest teilweise mittels eines Gussverfahrens, insbesondere eines Druckgussverfahrens, erhältlich ist.

12. Adsorberelement nach Anspruch 10 oder 11,
**dadurch gekennzeichnet, dass**
der aus Metall bestehende oder Metall enthaltende offenporöse Festkörper (1, 1a, 1b) zumindest teilweise durch Versintern metallischer oder metallhaltiger Fasern erhältlich ist.

13. Adsorberelement nach einem oder mehreren der vorhergehenden Ansprüche,
**dadurch gekennzeichnet, dass**
der offenporöse Festkörper (1, 1a, 1b) mindestens einen Transportkanal für das Adsorptiv aufweist.

14. Adsorberelement nach Anspruch 13, **dadurch gekennzeichnet, dass** der mindestens eine Transportkanal sich in einer fraktalen Struktur verzweigt.

15. Adsorptions-Wärmepumpe oder Adsorptions-Kältemaschine,
enthaltend mindestens ein Adsorberelement (21), einen Verdampfer, einen Kondensator und einen vakuumdichten Adsorptivkanal (24), der über Anschlüsse mit dem Adsorberelement (21), dem Verdampfer und dem Kondensator verbunden ist,
**dadurch gekennzeichnet, dass**
das mindestens eine Adsorberelement (21) einen wärmeleitenden Festkörper (1, 1a, 1b) und ein auf der Oberfläche dieses Festkörpers (1, 1a, 1b) angeordnetes Sorptionsmaterial für ein dampfförmiges Adsorptiv umfasst,
wobei auf der Außenfläche des flächigen wärmeleitenden Festkörpers (1, 1a, 1b) zumindest in den Bereichen, in denen ein Kontakt mit einem Wärmeträgerfluid vorgesehen ist, ein fluiddichter Folienverbund (2, 2a, 2b) angeordnet ist, der mit dem wärmeleitenden Festkörper (1, 1a, 1b) formschlüssig, kraftschlüssig oder stoffschlüssig verbunden ist, wobei der Folienverbund (2, 2a, 2b)
- mindestens eine erste Schicht, die eine Metallschicht und/oder eine Schicht aus einem in senkrechter Orientierung zur Schicht wärmeleitenden Material ist und
- mindestens eine zweite Schicht, die eine Siegelschicht oder eine Trägerschicht ist, aufweist und wobei ferner das Adsorberelement (21) derart ausgebildet ist, dass der Wärmeaustausch zwischen dem wärmeleitenden Festkörper (1, 1a, 1b) und/oder dem auf diesem angeordneten Sorptionsmaterial und dem Wärmeträgerfluid über den fluiddichten Folienverbund (2, 2a, 2b) erfolgen kann.

16. Wärmepumpe oder Kältemaschine nach Anspruch 15,
**dadurch gekennzeichnet, dass**
der im Adsorberelement (21) enthaltene wärmeleitende Festkörper (1, 1a, 1b) offenporig ist.

17. Wärmepumpe oder Kältemaschine nach Anspruch 15 oder 16,
**dadurch gekennzeichnet, dass**
das Adsorberelement (21) gemäß einem oder mehreren der Ansprüchen 1 bis 14 ausgebildet ist.

18. Wärmepumpe oder Kältemaschine nach einem oder mehreren der Ansprüche 15 bis 17, **dadurch gekennzeichnet, dass** mehrere Adsorberelemente (21) enthalten sind und zwei benachbarte Adsorberelemente (21) jeweils mittels mindestens eines Adsorptivkanals (24) verbunden sind, wobei zwei benachbarte Adsorberelemente (21) jeweils durch einen Adsorptivkanal (24) verbunden sind, der auf einer Achse angeordnet ist, auf der weitere Adsorptivkanäle (24) weiterer Adsorberelementpaare liegen.

19. Wärmepumpe oder Kältemaschine nach einem oder mehreren der Ansprüche 15 bis 18, **dadurch gekennzeichnet, dass**
mehrere Adsorberelemente (21) enthalten sind, die seriell und/oder parallel von Wärmeträgerfluid angeströmt werden können.

20. Wärmepumpe oder Kältemaschine nach einem oder mehreren der Ansprüche 15 bis 19, **dadurch gekennzeichnet, dass**
eine erste und eine zweite Gruppe von Adsorberelementen (21) enthalten sind, die jeweils zu einem Adsorberelementstapel nach Art eines Kamms angeordnet werden, wobei der erste und der zweite Adsorberelementstapel zueinander so positioniert werden, dass die Spitzen der Kämme ineinandergreifen und das Wärmeträgerfluid diese Anordnung mäanderförmig durchströmen kann.

21. Wärmepumpe oder Kältemaschine nach Anspruch 20, **dadurch gekennzeichnet, dass**
das Wärmeträgerfluid durch ein Gebilde nach Art eines Schlauches strömt, das wie ein Leporello zwischen den kammförmigen Adsorberelementstapeln angeordnet ist.

22. Wärmepumpe oder Kältemaschine nach Anspruch 20 oder 21,**dadurch gekennzeichnet, dass**
die Adsorptivkanäle (24) im Rücken des Kamms oder an den Spitzen des Kamms, den die Adsorberelementstapel bilden, verlaufen oder diese bilden.

## Claims

1. Adsorber element (21) for a heat exchanger including
a heat-conducting open poor solid body (1, 1a, 1b) and a sorption material for a vaporous adsorbate, which material is arranged on the surface of this solid body (1, 1a, 1b),
**characterized in that** on the outer surface of the flat open pore solid body (1, 1a, 1b) a fluid-tight foil composite (2, 2a, 2b) is arranged at least in the areas in which a contact with a heat transfer fluid is provided, which foil composite is connected to the open pore solid body (1, 1a, 1b) positively, non-positively or by adhesive force, wherein the foil composite (2, 2a, 2b) has
- at least one first layer that is a metal layer and/or a layer of a heat-conducting material in perpendicular orientation to the layer and
- at least one second layer that is a sealing layer or a supporting layer, and wherein furthermore the adsorber element (21) is embodied such that the heat exchange between the open pore solid body (1, 1a, 1b) and/or the sorption material arranged thereon and the heat transfer fluid can take place via the fluid-tight foil composite (2, 2a, 2b).

2. Adsorber element (21) according to claim 1, **characterized in that** the inner surface of the open-pore solid body (1, 1a, 1b) is coated with the sorption material and/or that the cavities surrounded by the inner surface of the open-pore solid body (1, 1a, 1b) contain the sorption material in loose form.

3. Adsorber element (21) according to claim 1 or 2, **characterized in that** the sorption material is arranged as a layer on the outer surface of the heat-conducting solid body (1, 1a, 1b), wherein this layer covers the areas of the solid body surface wholly or partially, in which no contact with the heat transfer fluid is provided.

4. Adsorber element (21) according to one or more of the preceding claims, **characterized in that**
the foil composite (2, 2a, 2b) has at least one sealing layer and at least one support layer.

5. Adsorber element (21) according to one or more of the preceding claims, **characterized in that**
the foil composite (2, 2a, 2b) is connected by adhesive force to the open pore solid body (1, 1a, 1b) by means of a binder or that the foil composite (2, 2a, 2b) and the open pore solid body (1, 1a, 1b) are sintered together at least partially.

6. Adsorber element (21) according to one or more of the preceding claims, **characterized in that**
the foil composite (2, 2a, 2b) possesses a geometric shape like a cuff or a tube wherein one or more partial areas of the outer surface of this foil composite (2, 2a, 2b) are connected or can be connected positively, non-positively or by adhesive force to the heat-conducting solid body (1, 1a, 1b).

7. Adsorber element (21) according to claim 1, **characterized in that** one or both of the two open ends of the cuff are sealed fluid-tight, so that a structure like a bag for fluids is present and that this structure like a bag for fluids has at least one connection each, through which the heat transfer fluid can flow into the bag and a connection through which the heat transfer fluid can flow out of the bag.

8. Adsorber element (21) according to one or more of the preceding claims, **characterized in that**
the surface of the foil composite (2, 2a, 2b) is structured such that the transport of the heat transfer fluid in the fluid phase can take place at least partially by means of a capillary effect caused by the surface structuring.

9. Adsorber element (21) according to one or more of the preceding claims, **characterized in that**
the adsorber element (21) has a geometric shape like a rectangle or like a hollow cylinder.

10. Adsorber element (21) according to one or more of the preceding claims, **characterized in that**
the open pore solid body (1, 1a, 1b) is composed of a metal and/or a ceramic or contains a metal and/or a ceramic.

11. Adsorber element (21) according to claim 10, **characterized in that** the open pore solid body (1, 1a, 1b) composed of metal or containing metal is obtainable at least partially by means of a casting method, particularly a pressure casting method.

12. Adsorber element (21) according to one of claims 10 or 11, **characterized in that**
the open-pore solid body (1, 1a, 1b) composed of metal or containing metal is obtainable at least partially by sintering metallic or metal-containing fibers.

13. Adsorber element (21) according to one or more of the preceding claims, **characterized in that**
the open-pore solid body (1, 1a, 1b) has at least one transport channel for the adsorbate.

14. Adsorber element according to claim 13, **characterized in that**
the at least one transport channel branches in a fractal structure.

15. Adsorption heat pump or adsorption refrigerator, containing at least one adsorber element (21), an evaporator, a condenser and a vacuum-tight adsorbate channel (24) that is connected to the adsorber element (21), the evaporator and the condenser via connections, **characterized in that** the at least one adsorber element (21) includes a heat-conducting open poor solid body (1, 1a, 1b) and a sorption material for a vaporous adsorbate, which material is arranged on the surface of this solid body (1, 1a, 1b), wherein on the outer surface of the flat heat-conducting solid body (1, 1a, 1b) a fluid-tight foil composite (2, 2a, 2b) is arranged at least in the areas in which a contact with a heat transfer fluid is provided, which foil composite is connected to the heat conducting solid body (1, 1a, 1b) positively, non-positively or by adhesive force, wherein the foil composite (2, 2a, 2b) has
- at least one first layer that is a metal layer and/or a layer of a heat-conducting material in perpendicular orientation to the layer and
- at least one second layer that is a sealing layer or a supporting layer, and wherein furthermore the adsorber element is embodied such that the heat exchange between the heat-conducting solid body (1, 1a, 1b) and/or the sorption material arranged thereon and the heat transfer fluid can take place via the fluid-tight foil composite (2, 2a, 2b).

16. Heat pump or refrigerator according to claim 15,
**characterized in that**
the heat-conducting solid body (1, 1a, 1b) contained in the adsorber element (21) is open pore.

17. Heat pump or refrigerator according to claim 15 or 16,
**characterized in that**
the adsorber element (21) is embodied according to one or more of the claims 1 through 14.

18. Heat pump or refrigerator according to one or more of the claims 15 through 17 , **characterized in that**
several adsorber elements (21) are contained and two adjacent adsorber elements (21) are connected respectively by means of at least one adsorbate channel (24), wherein two adjacent adsorber elements (21) are connected respectively through an adsorbate channel (24) that is arranged on an axis on which further adsorbate channels (24) of further adsorber element (21) pairs lie.

19. Heat pump or refrigerator according to one or more of claims 15 through 18, **characterized in that**
several adsorber elements (21) are contained that can be approached by the flow of heat transfer fluid serially and/or parallel.

20. Heat pump or refrigerator according to one or more of claims 15 through 19, **characterized in that**
a first group and a second group of adsorber elements (21) are contained that are each arranged to form an adsorber element stack like a comb, wherein the first and the second adsorber element stack are positioned with respect to one another such that the tips of the combs engage in each other and the heat transfer fluid can flow through this arrangement in the shape of a meander.

21. Heat pump or refrigerator according to claim 20, **characterized in that**
the heat transfer fluid flows through a structure like a tube, which is arranged between the comb-shaped adsorber element stacks like an accordion folding.

22. Heat pump or refrigerator according to one or more of claims 20 through 21, **characterized in that**
the adsorbate channels (24) run in the back or at the tips of the comb that the adsorber element stacks form, or form these.

## Revendications

1. Élément adsorbeur (21) pour un échangeur de chaleur comprenant un corps solide à pores ouverts thermoconducteur (1, 1a, 1b) et un matériau de soprtion pour un système adsorptif sous forme de vapeur disposé sur la surface intérieure de ce corps solide (1, 1a, 1b),
**caractérisé en ce que** sur la surface extérieure du corps solide plat à pores ouverts (1, 1a, 1b), au moins dans les régions dans lesquelles un contact avec un fluide caloporteur est prévu, est disposée une feuille composite étanche aux fluides (2, 2a, 2b) qui est connectée au corps solide à pores ouverts (1, 1a, 1b) par engagement par correspondance de formes, par force et/ou par liaison de matière, la feuille composite (2, 2a, 2b) présentant
- au moins une première couche qui est une couche métallique et/ou une couche constituée d'un matériau thermoconducteur dans une orientation perpendiculaire à la couche et
- au moins une deuxième couche qui est une couche de scellement ou une couche porteuse, et l'élément adsorbeur (21) étant en outre réalisé de telle sorte que l'échange thermique entre le corps solide à pores ouverts (1, 1a, 1b) et/ou le matériau de sorption disposé sur celui-ci et le fluide caloporteur puisse s'effectuer par le biais de la feuille composite (2, 2a, 2b) étanche aux fluides.

2. Élément adsorbeur (21) selon la revendication 1, **caractérisé en ce que** la surface intérieure du corps solide à pores ouverts (1, 1a, 1b) est revêtue avec le matériau de sorption et/ou **en ce que** les cavités entourées par la surface intérieure du corps solide à pores ouverts (1, 1a, 1b) contiennent le matériau de sorption sous forme libre.

3. Élément adsorbeur (21) selon la revendication 1 ou 2, **caractérisé en ce que** le matériau de sorption est disposé sous forme de couche sur la surface extérieure du corps solide thermoconducteur (1, 1a, 1b), cette couche recouvrant complètement ou partiellement les régions de la surface du corps solide dans lesquelles aucun contact n'est prévu avec le fluide caloporteur.

4. Élément adsorbeur (21) selon l'une quelconque ou plusieurs des revendications précédentes, **caractérisé en ce que** la feuille composite (2, 2a, 2b) présente au moins une couche de scellement et au moins une couche porteuse.

5. Élément adsorbeur (21) selon l'une quelconque ou plusieurs des revendications précédentes, **caractérisé en ce que** la feuille composite (2, 2a, 2b) est connectée au corps solide à pores ouverts (1, 1a, 1b) par liaison de matière au moyen d'un liant ou **en ce que** la feuille composite (2, 2a, 2b) et le corps solide à pores ouverts (1, 1a, 1b) sont au moins en partie frittés l'un avec l'autre.

6. Élément adsorbeur (21) selon l'une quelconque ou plusieurs des revendications précédentes, **caractérisé en ce que** la feuille composite (2, 2a, 2b) possède une forme géométrique de type manchette ou tuyau, une ou plusieurs régions partielles de la surface extérieure de ladite feuille composite (2, 2a, 2b) étant connectées ou pouvant être connectées au corps solide thermoconducteur (1, 1a, 1b) par engagement par correspondance de formes, par liaison de matière ou par force.

7. Élément adsorbeur (21) selon la revendication 1, **caractérisé en ce qu'**une ou les deux des deux extrémités ouvertes de la manchette sont fermées de manière étanche aux fluides de telle sorte qu'une structure de type sachet pour liquides soit obtenue et **en ce que** cette structure de type sachet pour liquides possède au moins un raccord respectif à travers lequel le fluide caloporteur peut entrer dans le sachet et un raccord à travers lequel le fluide caloporteur peut s'écouler hors du sachet.

8. Élément adsorbeur selon l'une quelconque ou plusieurs des revendications précédentes, **caractérisé en ce que** la surface de la feuille composite (2, 2a, 2b) est structurée de telle sorte que le transport du fluide caloporteur dans la phase liquide puisse s'effectuer au moins en partie au moyen d'un effet capillaire provoqué par la structuration de surface.

9. Élément adsorbeur (21) selon l'une quelconque ou plusieurs des revendications précédentes, **caractérisé en ce que** l'élément adsorbeur (21) possède une forme géométrique de type parallélépipédique ou en forme de cylindre creux.

10. Élément adsorbeur (21) selon l'une quelconque ou plusieurs des revendications précédentes, **caractérisé en ce que** le corps solide à pores ouverts (1, 1a, 1b) se compose d'un métal et/ou d'une céramique ou contient un métal et/ou une céramique.

11. Élément adsorbeur selon la revendication 10, **caractérisé en ce que** le corps solide à pores ouverts (1, 1a, 1b) constitué de métal ou contenant du métal peut être obtenu au moins en partie au moyen d'un procédé de coulée, en particulier un procédé de coulée sous pression.

12. Élément adsorbeur selon la revendication 10 ou 11, **caractérisé en ce que** le corps solide à pores ouverts (1, 1a, 1b) constitué de métal ou contenant du métal peut être obtenu au moins en partie par frittage de fibres métalliques ou contenant du métal.

13. Élément adsorbeur selon l'une quelconque ou plusieurs des revendications précédentes, **caractérisé en ce que** le corps solide à pores ouverts (1, 1a, 1b) présente au moins un canal de transport pour le système adsorptif.

14. Élément adsorbeur selon la revendication 13, **caractérisé en ce que** l'au moins un canal de transport se ramifie en une structure fractale.

15. Pompe à chaleur à adsorption ou réfrigérateur à adsorption, contenant au moins un élément adsorbeur (21), un évaporateur, un condenseur et un canal adsorptif étanche au vide (24) qui est connecté par le biais de raccords à l'élément adsorbeur (21), à l'évaporateur et au condenseur, **caractérisée en ce que** l'au moins un élément adsorbeur (21) comprend un corps solide thermoconducteur (1, 1a, 1b) et un matériau de sorption pour un système adsorptif sous forme de vapeur disposé sur la surface de ce corps solide (1, 1a, 1b), une feuille composite (2, 2a, 2b) étanche aux fluides étant disposée sur la surface extérieure du corps solide plat thermoconducteur (1, 1a, 1b) au moins dans les régions dans lesquelles un contact avec un fluide caloporteur est prévu, laquelle est connectée au corps solide thermoconducteur (1, 1a, 1b) par engagement par correspondance de formes, par force ou par liaison de matière, la feuille composite (2, 2a, 2b) présentant
- au moins une première couche qui est une couche métallique et/ou une couche constituée d'un matériau thermoconducteur dans une orientation perpendiculaire à la couche et
- au moins une deuxième couche qui est une couche de scellement ou une couche porteuse, et l'élément adsorbeur (21) étant en outre réalisé de telle sorte que l'échange thermique entre le corps solide à pores ouverts (1, 1a, 1b) et/ou le matériau de sorption disposé sur celui-ci et le fluide caloporteur puisse s'effectuer par le biais de la feuille composite (2, 2a, 2b) étanche aux fluides.

16. Pompe à chaleur ou réfrigérateur selon la revendication 15, caractérisé(e) en ce que le corps solide thermoconducteur (1, 1a, 1b) contenu dans l'élément adsorbeur (21) est à pores ouverts.

17. Pompe à chaleur ou réfrigérateur selon la revendication 15 ou 16, caractérisé(e) en ce que l'élément adsorbeur (21) est réalisé selon l'une quelconque ou plusieurs des revendications 1 à 14.

18. Pompe à chaleur ou réfrigérateur selon l'une quelconque ou plusieurs des revendications 15 à 17, caractérisé(e) en ce que plusieurs éléments adsorbeurs (21) sont prévus et deux éléments adsorbeurs adjacents (21) sont à chaque fois connectés au moyen d'au moins un canal adsorptif (24), deux éléments adsorbeurs adjacents (21) étant à chaque fois connectés par un canal adsorptif (24) qui est disposé sur un axe sur lequel sont situés d'autres canaux adsorptifs (24) d'autres paires d'éléments adsorbeurs.

19. Pompe à chaleur ou réfrigérateur selon l'une quelconque ou plusieurs des revendications 15 à 18, caractérisé(e) en ce que plusieurs éléments adsorbeurs (21) sont prévus, lesquels peuvent être parcourus par l'écoulement de fluide caloporteur en série et/ou en parallèle.

20. Pompe à chaleur ou réfrigérateur selon l'une quelconque ou plusieurs des revendications 15 à 19, caractérisé(e) en ce qu'un premier et un deuxième groupe d'éléments adsorbeurs (21) sont prévus, lesquels sont disposés à chaque fois de manière à former une pile d'éléments adsorbeurs à la manière d'un peigne, la première et la deuxième pile d'éléments adsorbeurs étant positionnées l'une par rapport à l'autre de telle sorte que les pointes des peignes s'engagent les unes dans les autres et que le fluide caloporteur puisse traverser en méandres cet agencement.

21. Pompe à chaleur ou réfrigérateur selon la revendication 20, caractérisé(e) en ce que le fluide caloporteur s'écoule à travers une structure de type tuyau qui est disposée sous forme de leporello entre les piles d'éléments adsorbeurs en forme de peigne.

22. Pompe à chaleur ou réfrigérateur selon la revendication 20 ou 21, caractérisé(e) en ce que les canaux adsorptifs (24) s'étendent dans le dos du peigne ou sur les pointes du peigne formé par les piles d'éléments adsorbeurs, ou forment ceux-ci.
